# EUROPEAN PATENT APPLICATION

(11) **EP 2 801 910 A2**
(43) Date of publication of application: **12.11.2014**
(21) Application number: 14180088.8
(22) Date of filing: 21.07.2008
(51) Int. Cl.: G06F 11/34, G06Q 30/00, G06Q 30/06, G06Q 30/02

(54) **Systems and methods for accumulating accreditation**

(30) Priority: 19.07.2007 US 961226 P; 18.07.2008 WO PCT/US2008/008807
(62) Divisional of application: 08780278.1
(71) Applicant: Depalma, Mark S., Bronxville, NY 10708 (US)
(72) Inventor: Depalma, Mark S., Bronxville, NY 10708 (US)
(74) Representative: Hocking, Adrian Niall

(57) **Abstract**

A method of accumulating accreditation includes locating evaluations from different sources relating to at least one entity and accumulating evaluations associated with the at least one entity to create an accreditation associated with the at least one entity.

## Description

### Reference to Related Application

The present application is based on and claims the benefit of U.S. Provisional application Serial No. 60/961,226, filed July 19, 2007, the entire contents of which are herein incorporated by reference.

### BACKGROUND

### Field of the Disclosure

The present disclosure relates generally to accreditation and, more specifically, to systems and methods for accumulating accreditation.

### Description of Background Art

In recent years, wide scale communication systems and wide area networks such as the Internet have proliferated and become widely adopted in homes, businesses and government. These systems have greatly increased the rapid and facile dissemination, communication and exchange of information regarding products, services, and knowledge generally. However, use of these systems has not been without problems and limitations. Incorrect, unreliable, shoddy and even fraudulent material is often transferred over these systems, without some or all of the readers or recipients of the incorrect or fraudulent information aware that this information is unreliable and unworthy of consideration.

Lack of integrity in the services, products and information that is posted or available in one form or another on the Internet or elsewhere leaves great room for improvement. It would be of the greatest use to attack these problems on a much more universal and root level than the rudimentary feedback systems used on such websites as eBay, as these attempts are merely local efforts to address the "lack of integrity" problem in a very limited and insufficient way. For example, those with bad feedback ratings on eBay can still open accounts on other sites and obtain a "clean slate" with impunity, despite being outright thieves.

Others have developed evaluation or rating systems for persons, products, businesses and/or services (for example U.S. Patent No. 6,064,978; U.S. Patent No. 6,434,549; feedback on Linkedin.com, Customer dispute reports on BBBonline, etc.) However, none of these systems can capture, store, process, filter, compile and present evaluations of an entity (e.g., any thing, product, person, group, service and/or activity) across a variety of websites and computer networks and present those evaluations in a organized, intelligent and useful way, analogous to a Dunn & Bradstreet report, not limited to financial information/credit worthiness, but that presents the quality, trustworthiness, and/or accuracy of a product, person, service, entity, group or system. Further, none of the present evaluation systems analyze evaluations and use that analysis to recommend specific types of education or methods of self-improvement. Nor do these types of systems use data or information gathered from such evaluations to coordinate or match persons, groups, entities, products or systems for benefits that become apparent with the disclosure herein.

### SUMMARY

This application describes tools (in the form of methodologies, apparatuses, and systems) for accumulating accreditation. The tools may be embodied in one or more computer programs stored on a computer readable medium or program storage device and/or transmitted in the form of a computer data signal in one or more segments via a computer network or other transmission medium.

A method of accumulating accreditation comprises locating or identifying evaluations from different sources relating to at least one entity, optionally providing evaluation(s) relating to at least one entity and accumulating evaluations associated with the at least one entity to create an accreditation associated with the at least one entity.

A method of utilizing accreditation comprises locating or identifying evaluations from different sources relating to at least one entity, optionally providing evaluation(s) relating to at least one entity-accumulating evaluations associated with the at least one entity to create an accreditation associated with the at least one entity and using the created accreditation to provide suggested education for the corresponding at least one entity.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
Figures 1-5 are block diagrams for describing various Cycles or Iterations of Participant Performance according to embodiments of the present disclosure;
Figures 6A-6G are flow charts for describing ways of providing Education according to embodiments of the present disclosure;
Figure 7 is a block diagram showing a computer system capable of implementing aspects of the present disclosure;
Figure 8 is a block diagram showing a network for explaining various aspects according to embodiments of the present disclosure;
Figure 9 is a block diagram showing some of the elements forming a system according to an embodiment of the present disclosure;
Figures 10 and 11 are block diagrams depicting cycles and iterations according to embodiments of the present disclosure: and
Figures 12 and 13 are block diagrams depicting cross-linking according to embodiments of the present disclosure.

### DETAILED DESCRIPTION

The following exemplary embodiments are set forth to aid in an understanding of the subject matter of this disclosure, but are not intended, and may not be construed, to limit in any way the claims which follow thereafter. Therefore, while specific terminology is employed for the sake of clarity in describing some exemplary embodiments, the present disclosure is not intended to be limited to the specific terminology so selected, and it is to be understood that each specific element includes all technical equivalents which operate in a similar manner.

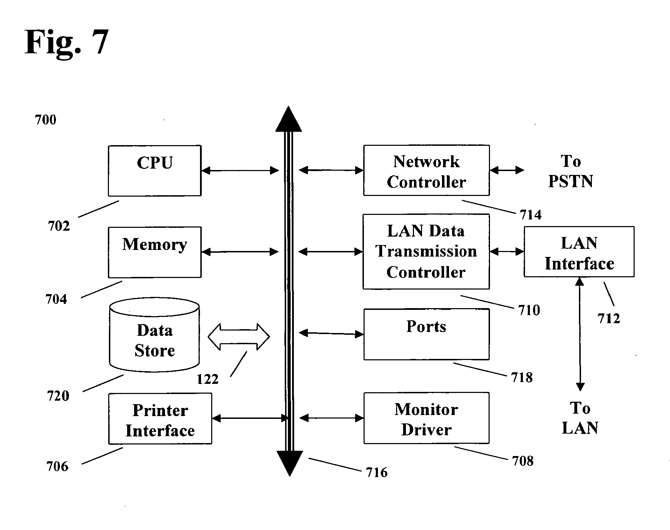

Figure 7 shows an example of a computer system 700 which may implement various methods and systems of the present disclosure. The systems and methods of the present disclosure may be implemented in the form of one or more software applications running on a computer system, for example, a mainframe, personal computer (PC), handheld computer, server, or cellphone, etc. The software applications may be stored on a recording media locally accessible by one or more computer systems, for example, floppy disk, compact disk, hard disk, etc., or may be remote from the computer systems and accessible via a hard wired or wireless connection to a network, for example, a local area network, or the Internet.

The computer system **700** can include a central processing unit (CPU) **702,** program and data storage devices **704,** a printer interface **706,** a display unit **708,** a (LAN) local area network data transmission controller **710,** a LAN interface **712,** a network controller **714,** an internal bus **716,** and one or more input devices **718** (for example, a keyboard, mouse etc.). As shown, the system **700** may be connected to a database **720,** via a link **722.**

The computer system **700** is merely exemplary. The specific embodiments described herein are illustrative, computer system(s) as referred to herein may include(s) individual computers, servers, computing resources, networks, etc., and many variations can be introduced on these embodiments without departing from the spirit of the disclosure or from the scope of the appended claims.

### GLOSSARY

**ACCREDITATION:** Accreditation includes one or more Evaluations of any type, either positive or negative (e.g., Discreditation) or anywhere in between, which may or may not be Categorized, concerning an Entity. Accreditation may also include one or more Evaluations of any endeavor, product, or Entity of Value created, conducted, performed, designed, expressed, communicated about, used or invented by an Entity, including but not limited to the activities of doctors, lawyers, engineers, chefs, musicians, CEOs, teachers, professors, lawn care specialists, nurses, handymen, plumbers, electricians, maids, talk show hosts, any lay person, amateur, apprentice, hobbyist, etc. Accreditation may result from an Evaluation by a human being or may be generated automatically. Accreditation may also include an Entity's formal education and grade point average, work experience, awards, peer reviews, proficiency ratings from various organizations, military record, licenses, credit rating, credibility rating, feedback ratings from various websites, and any sort of approval ratings. Accreditation may also include ratings, Evaluations or the popularity of tangible products created, invented, designed or produced by an Entity, such as the quality of an Entity of Value, widgets, crops, goods, clothing, devices, food, music, methods, ideas, views or implements, etc.

Accreditation may include or in an alternative embodiment be solely comprised of any Data or information regarding, related to, or specific to any Entity or Entity of Value.

Accreditation may contain or be information or Data that has not been categorized or rated. For example, there may be Data (e.g., a cookie) indicating that a Participant or Entity has visited a particular website. This Data may include, for example, a number of times a site was visited, particular topic areas visited, etc. For any reason this may not have been Categorized or rated or may be Categorized and or rated in the future.

The term Accreditation as used herein may also mean Cumulative Accreditation or that it comprises Cumulative Accreditation.
**CATEGORIZE/CATEGORIZATION:** A method of classifying any subject, such as including but not limited to: alphabetically, by number, keyword, phrase, multiple words or subject, any combination of these or using any other way or established method of categorizing information.
**CROSS LINKING:** Associating Entities for combining resources for the same, similar, or complementary purposes, including but not limited to notifying or having Entities that work for or potentially work separately or in communication with each other, in a collaborative, supportive or complementary manner or towards a common purpose.

For example, Cross Linking can be used by Chefs who are experts in different cuisines each do a separate video which is Accredited to them. Other Chefs or Restauranteurs, for example, may use these Accreditations or the Data or Entities located through them for cross linking to create new cuisines or for other uses.
**CUMULATIVE ACCREDITATION:** The accumulation of Accreditation, or a running Accreditation. Cumulative Accreditation or Accreditation may be stored in or accessed from or through any type of data structure, including but not limited to a database, file, cookie, file, applet, or both and can be made available either automatically or upon election or registration of the Entity to whom the Cumulative Accreditation belongs or (an)other Entity(ies).
**DATA CAPTURE or CAPTURE:** Any data or information concerning an Entity that is located, stored, accessed or made accessible directly or indirectly for facilitating access to data such as but not limited to storing addresses of where it is located or information leading to its location. Data may include, but is not limited to, articles or speeches, cases, trials, experiments, operations, peer reviews, proficiency reports/evaluations, and biographical information, Accreditations from other rating systems such as a feedback rating from eBay or a Dunn & Bradstreet credit rating, or student evaluations of a professor. In effect, Data may any form of human expression, etc. Data may also be Captured on any data or information processed (e.g., Evaluated and/or used for formulating, Preparing or determining Education, etc.) or unprocessed for purposes as taught herein by the present disclosure.
**EDUCATION:** Any data or information which may inform or suggest to an Entity how to improve, expand, or diversify skills, expertise, knowledge, repertoire, or available information. This may include but is not limited to any type of formal or informal training, coursework, course of study, treatise or learning, lessons, tutoring, or any other type of exercise or program. Education may or may not result in a degree, certificate, or any other formal mechanism of recognition, and may include online coursework, programmed learning or software concerning a specific area, endeavor, topic, language, vocation or discipline. The term Education may also include any form of Intellectual Input that an Entity is exposed to or receives. If Evaluated for assimilation or mastery of any Intellectual Input or Education, an Entity may receive Accreditation for Education. The term Education may also be meant to include the receipt of Accreditation for it. For example if it is said that an Entity received Education, this may mean that they also received Accreditation for it.
**ENTITY(IES):** Any thing, Entity of Value, product, person, group, service, system, institution, artificial intelligence, machine and/or activity, etc.
**ENTITY(IES) OF VALUE:** Any tangible or intangible, action, activity, expression, service, information, knowledge or thing created, Provided, Received, perceived or used by an Entity that is capable of being Evaluated in any way. The Evaluation of an Entity of Value may contribute to Accreditation, of any Provider(s), Recipient(s) or Participant(s), engaged with it. An Entity of Value may be Intellectual Output itself of any source.

An Entity of Value can be Intellectual Output itself or Intellectual Output can be Captured related to any Participant relation, communication, or action related to that Entity of Value.

An Entity of Value can be anything that is presented, communicated about or exchanged, even if it is intangible, such as Intellectual Output itself, Performance, etc. For example if a Patent Lawyer is presenting someone's idea to anyone, that idea (Intellectual Output) is being used as an Entity of Value. The lawyer may also be delivering his own Intellectual Output in the way he/she presents that idea and adds ideas of his/her own.
**EVALUATION(S):** The identification, categorization, classification, rating or measurement of the nature, type, constitution, fact(s), detail(s), aspect(s) integrity and/or quality of any Entity. For example, Intellectual Output, Intellectual Capital, Intellectual Input, Education, Entities of Value and/or Performances may be Evaluated, each in a number of different ways. Evaluations can be positive, negative, neutral, or based on any devised or recognizable system, such as including but not limited to, a point system, words, or letter grade system.

An Evaluation may include or be merely an identification of any interest, familiarity with, or exposure to a given Entity of Value, subject, subject area, or subject category. The nature of a Participant and thus their Evaluation may be provided or established solely by indication (or any Data of that indication) of visiting a particular website, webpage or medium of communication such as a publication or exposure to anything else.

An Evaluation may comprise or be solely, any Data or information that may be used to identify the nature or detail(s) or indicate what the nature or detail(s) may be of any Entity. Any Evaluation may be further Evaluated.
**INTELLECTUAL CAPITAL:** The IQ, education, experience, knowledge, information base, skill(s) or skill set(s), expertise, repertoire(s), intellectual abilities, proficiency, and/or understanding of an Entity. Intellectual Capital also includes the receipt, exposure, mastery and/or assimilation of Education.
**INTELLECTUAL INPUT:** Any contribution or improvement to Intellectual Capital. For example, a unit of knowledge, no matter how trivial or insignificant, for example, learning a single fact from a blog entry, word or gesture is Intellectual Input.
**INTELLECTUAL OUTPUT:** Any expression, action, performance service, presentation, demonstration, indication, or communication by an Entity.

Intellectual Capital regarding an Entity or Participant may be identified from, indicated by or directly expressed by, Intellectual Output (or found through further engagement of or communication of or with, the Participant related to the Intellectual Output). This Intellectual Capital may be used for Evaluation.

Intellectual Output may be Evaluated in various other ways. For example but not limited to, if an Entity is performing a particular laboratory procedure or another type of action, Data may be Captured on this and Evaluation and/or Accreditation may take place. This Accreditation may be used for Cross Linking or Education to help that Participant improve that procedure. Thus there may be no interest in Evaluating the Intellectual Capital of that Participant but his/her Intellectual Output may be Evaluated for other reasons and benefits.

Intellectual Output can be any indication of any recognition or familiarity with, any Entity of Value and may be added to a Participant's Evaluation as a form of identification of the nature of the Participant. In an embodiment, for purposes of comprehensively Capturing data that may reveal something about the nature of any person, group, entity, etc. Evaluation or Accreditation may comprise any Data Captured regarding a person, etc. which may or may not be found to contain any Intellectual Output upon which Evaluations may be based.

Whenever an Entity of Value is Provided by, Received, or exposed to an Entity, Intellectual Output may be related to, associated with or derived by further communication with the Provider, Recipient, or Entity or derived from the Entity of Value itself.
**PARTICIPANT:** Any Entity of which or whom or related to which or whom, Data may be Captured or used for the purposes taught by the present disclosure. A Participant may be aware that Data is being Captured or have an understanding of or active interest in engaging in the purposes taught herein (an active Participant). Or a Participant may be unaware or have acted independently or with no interest of any Data Capture or uses taught herein that may have occurred, occurs or will occur, of or related to such Participant (a passive Participant). Therefore the term Participant means that the Participant may be either active or passive or both, unless specified otherwise.

A Participant may be an Entity that engages in any role or performs any function or process as taught herein. For example a Participant may be but is not limited to, a recipient or provider of Intellectual Output, Intellectual Input, or any Entity(ies) of Value, one that Evaluates, an Educator or formulator or selector of Education, etc.

A Participant or Entity may be in full or in part an auto Participant system, or Entity that may perform any function(s) of a Participant or Entity automatically, such as for example but not limited to smart machines, systems or apparatuses (including but not limited to software and/or hardware) capable of analysis and/or communication, a computer or computers or other data processing system(s), or intelligent system(s) such as a Robot.

A Participant or Entity may include, for example, any type of organization or group such as but not limited to: a corporation or group of them such as a conglomerate, (a) web group(s), public group(s), etc.
**PERFORMANCE:** Any measure of the quality, or how or the manner in which Intellectual Output is delivered or provided. For example, the Intellectual Output of an Entity may be of a very high quality, but the delivery of that Intellectual Output may be very poor, such as a boring lecture, a treatise that is difficult to comprehend or use, or book that is delivered late to a publisher, or an uninspiring concert. This may be referred to as the Performance of Intellectual Output or Performance.

The term Performance as used herein may also refer to the expression, presentation, communication, communication about, providing, transfer, production, delivery, receipt, or exposure to and/or the manner and/or method (some of which will be described below) of the expression, presentation, communication, communication about, providing, transfer, production, delivery, receipt, or exposure to (of) Intellectual Output or (of) any Entity of Value (and may include the substance or material of these) or engaging in Intellectual Input or Education by any Entity.

For example, Performance can occur by (an) Entity(ies) of Value being expressed, presented, communicated, communicated about, transferred, demonstrated, produced received, exposed, delivered, or Provided, to (by) any Entity.
PROVIDER , PROVIDE: Any Entity, that provides, communicates, communicates about, presents, or transfers (or may do any of these things, Prospective Provider) any type of Intellectual Output or Entity(ies) of Value, or anything else.
RECIPIENT, RECEIVE: Any Entity that receives or may receive (Prospective Recipient) or, is exposed to Intellectual Output, Input or any Entities of value, or anything else.

### End of Glossary

Human society is largely dependent on the exchange of goods, services, and with the advent of the modern communication systems, information itself. The Internet in particular has allowed Entities to search for and present, communicate, transfer, and exchange information, know-how, services and products on a scale that was heretofore unimaginable. However, the ease of communication enabled by the Internet also fosters the proliferation of incorrect or unreliable information, untrustworthy individuals, and incompetent businesses. In other words, interactions or transactions that are now easy to accomplish by virtue of the Internet are hampered by the lack of information about those involved, including the intellect, education, experience, reliability, credibility, and/or productivity of the Entity providing the information, product, service or system of interest, for example.

The systems and methods described herein captures, performs, stores, filters, categorizes and presents Evaluations of, Performances of, Intellectual Output, Intellectual Input, Education of Entities and/or Evaluations of Entities of Value. By accumulating these Evaluations (Cumulative Evaluation) and thereby building Accreditation (Cumulative Accreditation), a previously unknown level of trust and confidence can be built for Entities by widely disseminating Accreditation. This dissemination of Accreditation for Entities thereby facilitates transactions and exchanges among those that have never interacted before. The Accreditation can also be improved, corrected (in the case of negative Evaluations or Accreditation) or built upon by recommending Education to an Entity, so the Entity can remain competitive in a particular marketplace for products or services, for example.

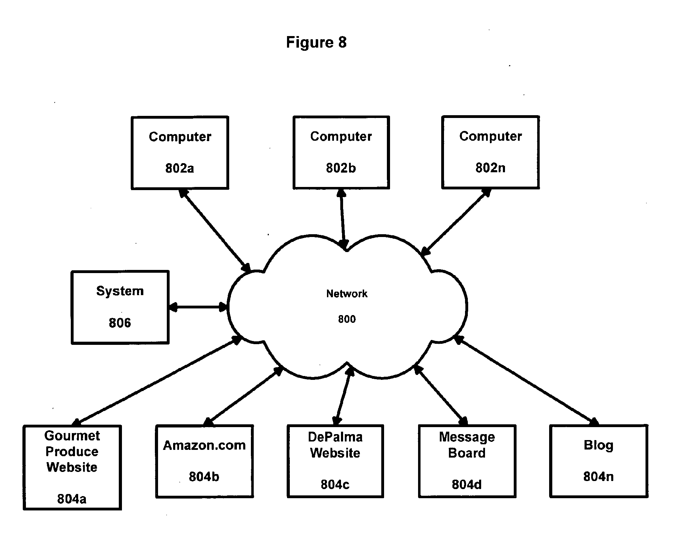

Figure 8 is a block diagram for describing various aspects of the present disclosure. A network 800 such as, for example, the Internet allows communication using many different types of machines, including various types of computers, servers, etc. Users (802a-802n) of the Internet have access to a virtual endless supply of information. Examples of the types of information sources (804a-804n) include innumerable websites, blogsites, business sites, etc. The range of topics associated with these information sources is immense. Only a few of the types of information sources available are discussed herein. Of course, the present disclosure is in no way intended to be limited to such sources.

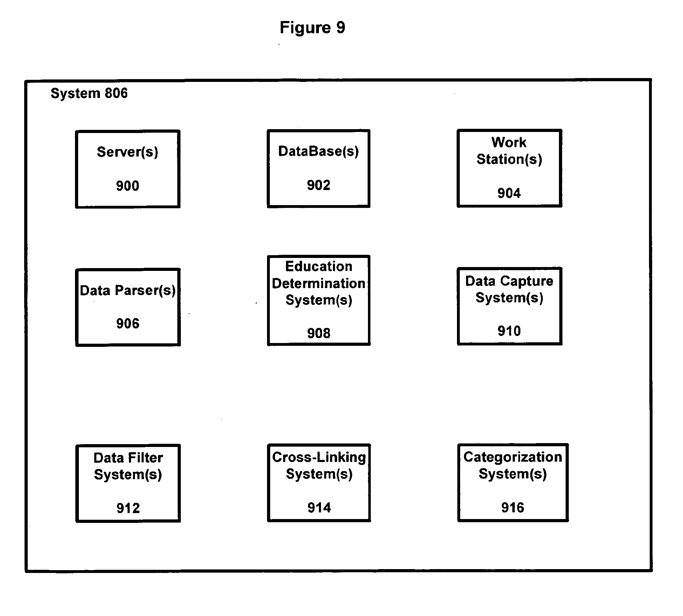

System 806 represents a system capable of implementing aspects of the present disclosure. As shown in Fig. 9, system 806 may include one or more servers 900, one or more databases 902, one or more workstations 904, one or more Data parsing systems 906, one or more Education determining systems 908, one or more Data Capture systems 910, one or more Data Filter systems 912, one or more Cross-Linking systems 914 and one or more Categorizing, Evaluation, and/or Accreditation systems, 916, etc. Of course, the elements forming System 806 may be in one location or may be spread out over multiple locations.

Now, by way of example, over the course of 10 years, an organic farmer by the name of Jonas DePalma has developed a unique, hyponically grown organic tomato that takes substantially less time and therefore less energy to grow, yet it tastes better than almost all other organic tomatoes. According to this example, Mr. DePalma has recognized the many benefits associated with aspects of the present disclosure and has become an active Participant in the present systems and methods. For example, Mr. DePalma has actively registered with system 806, providing sufficient information to allow system 806 to easily Capture Data associated with him. Mr. DePalma has provided system 806 with the names he utilizes on various websites he visits and/or on which he is actively involved. Mr. DePalma has also agreed that system 806 may examine cookies on his computer to determine any other sites he may have visited. Mr. DePalma has also downloaded software onto his computer(s) that is capable of keeping track of sites visited, the subject matter of the portions of the sites visited, etc. and providing that information to system 806.

The DePalma Tomato is an Entity of Value that represents, in part, Mr. DePalma's Intellectual Capital. Based on the taste, consistency and flavor, Jonas DePalma has received 832 Evaluations for the DePalma Tomato, on a website 804a dedicated to gourmet produce. These Evaluations were subject to Data Capture and contribute to Jonas DePalma's Accreditation, categorized as Entities of Value, DePalma Tomato. For example, Mr. DePalma supplied the name of this site and his name used thereon, when he registered with the system 806. System 806 periodically goes to website 804a and retrieves the Evaluations as Data Capture, filters, categorizes and stores the information.

Jonas DePalma also authored a book on growing hyponic, organic produce entitled, "The DePalma Method For Organic, Consistent Yields." Mr. DePalma's book is thereofore an example of his Intellectual Output. Mr. DePalma's book has received 29 positive Evaluations on Amazon.com (804b), mostly from farmers and gardeners who tried his method for growing organic tomatos with great success. These Evaluations are subject to Data Capture and also contribute to Mr. DePalma's Accreditation, Categorized as Intellectual Output, Sub-Category, Books & Articles. For example, system 806 periodically goes to the Amazon.com site to see what books have recently been published and to review the evaluations associated therewith. In this case, system 806 has been able to match the book with Mr. DePalma and has Data Captured this information including the Evaluations.

Mr. DePalma has his own website (804c) where he provides biographical information about himself, information about his farm, and where he discusses the technology and methods he uses to grow produce. For example, Mr. DePalma's website explains that he received a Doctorate in Agricultural Science from the University of Maryland in 1985, which is a portion of Mr. DePalma's Intellectual Capital. This information is also subject to Data Capture and becomes part of Mr. DePalma's Accreditation, Categorized as Education; Sub-Category, Formal Education.

Mr. DePalma does business with a number of speciality food shops and high-end restaurants within several hundred miles of his farm. Mr. DePalma's customers usually specify how many pounds of tomatos Mr. DePalma is to deliver, and over what period of time. Because Mr. DePalma has engineered precise controls on yield and crop readiness, Mr. DePalma almost always delivers his tomatos to his customers in a timely fashion. Therefore, on several message boards (804d) that supermarket and restaurant produce buyers frequent, Mr. DePalma consistently receives high marks (i.e., Evaluations for Performance). These high marks are subject to Data Capture and become part of Mr. DePalma's Accreditation, Categorized as Performance, Sub-Category, Timeliness.

Finally, two studies are published during the course of several months concerning lycopene, a naturally occurring organic compound found in tomatoes. The first study confirms that lyopene is a powerful antioxident and that individuals who ingest at least 4 to 5 tomatoes a day experience significantly lower rates of certains types of cancer. The second study discloses that if tomatoes are grown using a particular method, the resulting tomatoes have twice the amount of lycopene as most other types of tomatoes. Education Determining system 908 of System 806 has determined from Mr. DePalma's Accreditation thus far, that these studies could be of interest to Mr. DePalma.

These studies are subject to Data Capture and are referred to Mr. DePalma as suggested Education to improve the lycopene levels (and therefore the antioxident properties) of the DePalma Tomato. These studies are also Intellectual Input for Mr. DePalma. After reading these studies, Mr. DePalma decides to post them on his website and begin growing DePalma Tomatoes according to the method disclosed in the second study (i.e. DePalma Tomatoes now become high lycopene DePalma Tomatoes), which Mr. DePalma also discloses on his website. This information is also subject to Data Capture and added to Mr. DePalma's Accreditation as Education; Sub-Category, Self-Study.

As a result of Mr. DePalma's Accreditation, a new restauranteur decides to place an order for 100 lbs of DePalma Tomatoes, even though he has never met Mr. DePalma and never done business with him before, and even though he has never tasted a DePalma Tomato. Hence, the system and method described herein has, *inter alia:* (1) encouraged Mr. DePalma to increase his Education concerning how to raise tomatoes; (2) increased Mr. DePalma's Accreditation concerning the raising of tomatoes; (3) increased the quality of the DePalma Tomato by increasing its antioxidant content, and (4) facilitated a transaction among total strangers based on specific Categories of Evaluations that appear in Mr. DePalma's Accreditation (such as the taste of the DePalma Tomato and Mr. DePalma's ability to consistently deliver them on time).

In another example, Simon DeFranko, a MIT Ph.D. in Electrical Engineering and audio enthusiast/hobbyist, is retired after a long career with the Jet Propulsion Lab in California. Mr. DeFranko's work experience and Education are incorporated into his Accreditation, due to his long involvement in the field of Electrical Engineering. Mr. DeFranko enjoys building stereo amplifiers using vacuum tubes in his spare time and has acquired a great deal of knowledge and experience concerning different types of vacuum tubes suitable for audio applications and the circuit topologies of various amplifiers. Mr. DeFranko participates in a number of message boards concerning the construction of amplifiers using vacuum tubes, and is recognized as an authority on the subject. As a result, Mr. DeFranko has acquired a number of positive Evaluations concerning vacuum tube amplifiers and vacuum tubes. These Evaluations are Captured and integrated into this Accreditation under Electrical Engineering, Sub-Category, Vacuum Tube Amplifier Design.

While on vacation in England, Simon DeFranko sees that a famous vacuum tube manufacturing facility is for sale and jots down the information. Upon his return to California, Mr. DeFranko starts a corporation, DeFranko Vacuum Tubes, Inc., acquires funding and purchases the vacuum tube manufacturing facility in England. After several months of testing and refurbishing, DeFranko Vacuum Tubes begins manufacturing KT88 power tubes (Mr. DeFranko's KT88 tubes are Entities of Value). In an effort to market these new vacuum tubes, Mr. DeFranko provides samples of his KT88 vacuum tube to several amplifier companies in the United States, Japan, and China and several stereo and audio magazines.

The DeFranko KT88 tubes are reviewed by audio magazines and amplifier manufactures as superior to any other power tube currently manufactured for audio purposes. These reviews are subject to Data Capture, Categorized as Electrical Engineering, Sub-Category Vacuum Tube Manufacturing and stored in Mr. DeFranko's Accreditation, and similarly in the Accreditation for DeFranko Vacuum Tubes, Inc. The positive Evaluations for the DeFranko KT88 are also Categorized in the Accreditation for DeFranko Vacuum Tubes as a Performance, Sub-Category Vacuum Tube Manufacturing, as DeFranko Vacuum Tubes' superior manufacturing techniques result in thicker glass walls and therefore less resonance and vibration than other tubes. These characteristics create a power tube capable of greater detail and nuance when amplifying audio signals.

Therefore, based on its Accreditation, before selling a single tube, DeFranko Vacuum Tubes has acquired a reputation (stored as Accreditation) as one of the premier manufacturers of the KT88 power tube and is flooded with orders from amplifier manufacturers and audio enthusiasts.

In short, any Entity can be Evaluated, Categorized and accumulated for the purposes of Accreditation. In addition, any Entity of Value can be Evaluated. For example, evaluations may be provided for a make and model of automobile, computer, or any other item or Entity of Value. Evaluations may also be provided for a Performance, such as the delivery of goods by a merchant properly packed and in a timely fashion, the Performance of a musician at a concert, the Performance of a professor in giving a lecture, the Performance of a surgeon for a particular type of procedure, or the Performance of a litigator at Trial, etc.

It will be appreciated that there are various ways System 806 can perform Data Capture as described herein. For example, instead of registered users of System 806 providing a list of sites they frequent, the websites themselves might have a subscription to System 806. When a Participant (active or inactive) visits the subscribed website, the website may (or may not) inform the Participant that information on the site is subject to Data Capture. Data may also be Captured for any Participant or Entity of Value by use of an identifier (e.g., a cookie) that may accompany any Data related to a Participant or Entity of Value. For example, the Participant's computer can include a cookie that is automatically sent to a site along with any Data related to the Participant or Entity of Value instructing that the Data be sent to System 806 as Data Capture. In addition, it will be appreciated from the present description that data may be Captured utilizing any type of device or system including, for example, smart software, cookies, crawlers, robots etc. or other system(s) which crawl or search a network or any location or system. The crawlers, robots, etc. are capable of continually searching a network for information including information relating to a Participant and then performing Data Capture and forwarding the Data to System 806.

Intellectual Output may also be Evaluated, for example, the content of a book, lecture, CD or software. Intellectual Input, Intellectual Capital and Education can also be evaluated, for example, a blog entry, as Intellectual Input, can be Evaluated. Similarly, the Intellectual Capital of an Entity can be Evaluated, for example, the extent that a particular individual is an expert in a particular field, or the extent a Corporation has technical expertise in a particular field, such as GPS, Radar Receivers, or Digital Imaging. These Evaluations are Captured, processed or filtered, and may be Categorized and accumulated to become the Accreditation associated with the Entity.

In order to assist Entities to improve, or to improve their Entities of Value, Accreditation or Evaluations can be analyzed to recommend Education or Intellectual Input. For example, this Education may be in the form of an online course, a degree program, one or more books or articles concerning recent developments in a Category of Accreditation, or an educational dvd or videotape. Similarly, Intellectual Input can also be recommended. For example, if an Entity has Evaluations concerning vintage Japanese turntables, a blog entry or webpage comparing several vintage Japanese turntables can be referred to that Entity. Or, if an Entity such as law firm has a negative evaluation concerning their billing practices, corrective action such as a course in acceptable/equitable billing practices could be recommended to the law firm. In sum, recommended Education may expand, improve, correct and/or diversify any product, service, entity, activity or system. Further, subsequent Evaluations may show that the corrective Education either did or did not have its intended effect. For example, if the Evaluations of a law firm's billing practices went positive after several key billing partners took a course on billing practices, those Evaluations might demonstrate that the law firm assimilated the prescriptive Education.

Among other things, Education can also be Evaluated. Anyone or anything that provides Education can be evaluated, such as those who provide formal Education, such as Universities, to instructional books, videotapes, DVDs and computer software for learning a foreign language, for example. Separately, the content of a course can be evaluated, in other words the Intellectual Output of the course, or the Performance of the instructor can be Evaluated. The Evaluations can become part of the Accreditation of a University, a University Professor, an instructional software program, an aerobics instructor, or any person, institution, organization, software or book, etc. that provides Education in any form.

Those who have Accreditation in a particular field or endeavor can be referred to others who are similarly Accredited to exchange ideas and suggest joint endeavors. This is an example of Cross-Linking. Similarly, those who are in need of a particular type of expert can search for those particular categories of Accreditation to locate an Entity that can assist them in solving a specific type of problem. Or those in search of a particular type of Entity of Value can search for those who, grow or produce them in a geographic area or in a price point, or of a certain size, color, quality or flavor. This ability to locate or associate is termed Cross-Linking. As discussed above, Cross-Linking can automatically associate other Entities of interest, or can result from a search of Accreditations.

Accordingly, the system and method described herein facilitates the exchange of information, know-how, experience as well as goods and services by providing a rating, measurement, and/or identification system that categorizes and discloses the background, education, experience, reliability and trustworthiness of an Entity. The system and method also fosters Entities to improve themselves or their products by recommending Education to improve Accreditation, or simply providing feedback on an Entity of Value, Intellectual Output, Intellectual Input, or Education associated with an Entity.

More detailed aspects of the present disclosure will be described below.

Participant(s), including people (or increasingly, even machines or systems implemented by humans), engage from day to day in the presentation, communication , transfer, or exchange of Entities of Value such as, for example information, knowledge, products, services, etc. These interactions or presentations carry or can carry or be associated with great amounts of information about the Participant(s) involved. For example, it can include the information and knowledge resources, as well as skill sets and abilities, reliability, credibility, productivity, etc., of the Participants of these communications, transfers and exchanges, most of which has not been utilized for utmost benefits prior to the present disclosure. This information or data, as described to some extent herein, can be referred to as Intellectual Capital. The delivery of this data and information by the Participants, can be referred to as the Intellectual Output, and the manner and way of delivery along with any Entity(ies) of Value delivered or received, can be referred to as the Performance of the Participants.

Capturing and processing Data and Information on this Intellectual Capital, Intellectual Output and Performance of the Participant(s) and using it for purposes such as Evaluation, Accreditation and Education, improved matching of recipients to providers and various other benefits, some of which were touched upon above, will be described in more detail later below.

Data or information may be Captured or acquired on such Intellectual Capital, Intellectual Output, Entity(ies) of Value and Performance(s) of Participants and processed according to the teachings of the present disclosure utilizing any system(s) of data processing (which may be capable of filtering and/or processing data or information for the uses taught by the present disclosure) and/or data storage and retrieval, such as (a) computer system(s). Data for Capture may be acquired through any type of communication between humans or Participants or between humans or Participants and machines or systems utilized by them. Such communication may include but is not limited to cell phones, keyboards, or any other type of textual or language input video, audio terminals, fax machines, other computers, transducers, audio microphone, graphic or text scanner, audio or graphic language and word recognition systems, video, video recognition system(s), or any type of human or Participant recognition, mediation, translation, interpretation or intervention, which may be expression or action over graphic, visual, audio or other sensory communicative or detection devices, systems or media, or over any system of communication etc. Data or information processed according to the present disclosure such as Evaluations, Accreditations and Education may be also communicated over such systems or devices, or any other methods of communication such as including but not limited to bill boards, or other graphic media, audio or video media, printed media, television or networks of communication such as including but not limited to the Internet or Worldwide Web, phone systems etc.

Whenever knowledge, information, product(s), service, etc. or any other type of Entities of Value is/are expressed, communicated or communicated about, transferred, presented or exchanged, information is carried with it or may be carried with it regarding the Intellectual Capital (defined herein as resources, knowledge base, etc .) of the Participant(s), which may be of (a) Provider(s) and /or (a) Recipient(s) or prospective of either. This may be in the form of direct Intellectual Output, which may be for example a direct expression or communication of the Participant, or it may be for example an action or Data or information related to the Participant from which (if necessary with further communication or Data Capture) Intellectual Output may be recognized, interpreted or translated.

When tangible or intangible products, information, knowledge, service or any other type of Entity of Value is presented, communicated, communicated about, indicated, expressed, exchanged, etc. by any Participant, there is an indication that such Participant (either a Provider and/or Recipient, of such Entity of Value, data or information), has a familiarity with this product or Entity of Value. This indication itself is Intellectual Output which may be added to the Evaluation(s) and/or Accreditation(s) of such Provider or Recipient. The Provider may also supply information along with the product or via further communication regarding the product, revealing more about their role in the provision of the product, design, manufacturing, etc. This may be Captured as Intellectual Output and the information on the Provider is Intellectual Capital of the Provider. A Recipient may engage in communication or expression regarding or related to this Entity of Value which may also provide Intellectual Output of the recipient. This information or Data can be acquired or Captured (stored, filtered, processed, etc.) through any method of communication, data processing and/or storage such as, for example, those described above, and may be used for Evaluation or Accreditation, as well as other purposes such as Education and matching of recipients to providers and Cross-Linking.

Many products come with or contain information or knowledge about that product which may provide Intellectual Output and a measure of the Intellectual Output of the Provider. For example, a food product may contain a list of Ingredients or nutrients and if this product is transferred or presented to another Participant, it provides (and if necessary with further communication with the Provider) Intellectual Output that the Provider has familiarity with and knowledge of.

A provider of products with various types of warranties (which may be in textual form or any other form acquirable or Capturable by the System), may make presentations, transfers, exchange(s) etc. to other Participant(s). This provider may have engaged in Intellectual Output of the use of Warranties and exhibited some degree of familiarity with the use of warranties. The specific Intellectual Capital that provider has about the use of Warranties may be clear or may obtained thru further communication with him. For example, he may know or have the ability to valuably opine and inform on what types of warranties are best for what type of product(s). This Data may be captured according to an embodiment of the present disclosure. The Data may then be Evaluated so that the Provider may be Accredited or Discredited on the Intellectual Output of information on Warranties or other types of legal informational Entities of Value (such as but not limited to what distribution agreements work best with certain types of products, information that may go beyond or complement the Intellectual Capital of many traditionally Educated and Accredited experts such as lawyers, MBAs, accountants, etc., of which the present disclosure may also complement and improve the value of their services) or any other types of Entities of Value that he participates in the exchange, presentation of or communication about, etc.

Many other products may be considered legal Entites of Value such as for example but not limited to paper or electronic financial Entity(ies) of Value, such as including but not limited to, instruments such as bonds, securities, or deeds. These may also be considered informational Entities of Value.

Many other products or services are based to a large extent on the informational or knowledge content thereof and may be termed Informational Entities of Value. Such a category or categories may include but is not limited to: Research Reports, weather reports, satellite data or other types of instrument or human generated data or information, books or other types of written material or lectures or simple single word or single phrase answers or questions or statements or gestures. Such material may be presented or transferred in audio or video or graphic form or any manner in which Data may be Captured.

When a Provider presents such Entities of Value or a Recipient receives them, such Participant is demonstrating an indication of Intellectual Output of having or lacking (a conclusion on this depending upon the results of Evaluation, Accreditation or Discreditation) a familiarity or skill set or informational knowledge base (Intellectual Capital) in the classification(s) or category(ies) of such Entities of Value.

Intellectual Output regarding the presentation or communication of any Entity of Value may be Captured. For example being the Provider or Recipient of plumbing or a plumbing service or lawn care or expressing an interest in these (or any accompanying facts, data or details) demonstrates some awareness of or familiarity with such Entities of value which in and of itself can be considered Intellectual Output of the Provider and/or Recipient. Any further communications of Provider or Recipient or any privy Participant may be Captured as Intellectual Output and added to the Evaluation or Accreditation of any such Participant. This may seem trivial by itself but when added to the Evaluation or Accreditation of an individual it may help in matching with others (e.g., Cross-Linking) or Educating in ways taught by the present disclosure to provide many benefits. For example, a Recipient of lawn care services may be able to share information with others that lack Accreditation in certain areas. For example, a Recipient in lawn care that has received Evaluation and Accreditation in safe, non-toxic or organic methods of weed control may be matched with others that have Accreditation in lawn care but lack Accreditation in such safe, non-toxic or organic methods of weed control. This may benefit all those involved in the exchange of valuable information.

Whenever information or knowledge is presented or service performed or any Entity(ies) of Value expressed by or about, or otherwise arise, Intellectual Output may be detected and/or processed according to embodiments of the present disclosure. Such Entity(ies) of Value or expression(s) by or about them or Intellectual Output itself (such as a direct expression of knowledge or information) may be simply an utterance in natural language that is recognizable by another Participant, Auto Participant or Apparatus of the present disclosure, an answer with an affirmative or a negative, a yes or a no or the question itself, which may be a single word, phrase or sentence or in the form of an elaborate Request for a proposal to do a project, any kind of expression which may be unsolicited, gratuitous, or in response to any other expression(s) of any Participant(s). The Intellectual Output may be entire courses given on material, (which may be received as Intellectual Input and Evaluated in a manner as described herein), a degree program, or a single gesture (meaning of which may be somehow Captured as information of Intellectual Output such as by human or machine or system recognition, translation, and/or mediation), a physical, visual and/or audible performance or demonstration, many volumes of writings, etc.

As described herein, an Entity of Value can be Intellectual Output itself and may be used to build Accreditation and provide income for a Participant or Entity. For example, a businessman or lawyer with no formal training in business (such as an MBA, accounting degree, etc.) can, over a period of time, offer various information on business (which may include marketing, financing, sales advice, etc.) in any media or venue such as blogs, websites, printed articles, etc. and even engage in business transactions such as on Ebay. Eventually by building up Accreditation in giving business advice (Intellectual Output used as an Entity of value) such as in Cycles and Iterations to be described later below, he or his Entity (a corporation for instance) can command or be offered compensation or exchange for business advice although he had no formal training but was Accredited only through the Accreditation in accordance with aspects of the present disclosure.

As a non-limiting example, (a) Participant(s) may Provide (express, present, exchange, transfer, etc.) or communicate or express about or something related to a tomato, a computer , a car or any other item or Entity(ies) of Value. The Participant(s) may make a gesture regarding the tomato or other item, which may be Captured by the System as indicating that the tomato may have been produced without exposure to synthetic pesticides (or some other factor or criteria of Intellectual Capital, knowledge or information about the tomato, such as but not limited to, for example, nutritional value of the tomato). This gesture may be identified as Intellectual Output of the Provider by the System and then utilized for purposes of the present disclosure such as Evaluation(s) (was the information correct, appropriate, timely given, etc.), Accreditation(s) of the Provider(s), etc. If the Recipient(s) play a role where they engage in some form of Intellectual Output as identified by the System, they may be Evaluated and/or Accredited also. Data Capture of any of these processes may help in the many benefits provided by the present disclosure.

Intellectual Output regarding the tomato Provider may be Captured and processed by the System from any number of types of presentation(s) or exchanges, expression(s), etc. of Entity(ies) of Value. For example, the Provider may engage in the packaging and shipping of tomatoes, or teach a course on tomatoes, or write a book on tomatoes, or grow tomatoes, give a lecture on tomatoes, engage in conversation about tomatoes, answer (a) question(s) about tomatoes, or raise (a) question(s) about a tomato or tomatoes, etc. Information or Data of Intellectual Output may be Captured from any of these types of presentations, exchanges, communications, transfers, etc. of Entit(ies) of Value, and used for Evaluation(s) and/or Accreditation(s) of any Provider(s), Recipient(s) or other Participant(s) and/or used for any other purpose described in the present disclosure.

Whenever any Entity(ies) of Value are presented, communicated, transferred, exchanged, or conveyed from one Participant to another (either of which may be actual or prospective), a manner(s), type(s), and/or method(s) of Performance(s) are involved. Various Iterations or Cycles of Performance which are common and quite useful for the purposes of the present disclosure will be described later below. These manners and methods of Performance can reveal Intellectual Output on the parts of either or both Recipient(s) and Provider(s). For example, if a Recipient demonstrates interest (by selecting web pages, web forums or websites or individual selections therein, or by providing compensation or exchange of other Entities of Value, etc.) in certain classes, sub-classes or categories of Entities of Value (which may contain Intellectual Output or indications thereof of Provider(s)), then the Recipient(s) is indicating Intellectual preference(s) and/or selectivity(ies) for certain classes, categories or sub-classes of Intellectual Output or Capital. This is a form of Intellectual Output of the Recipient. The Recipient may also engage in repeated exchanges with Providers in which Intellectual Output may be provided by all parties.

Once Data is Captured that bears information or an indication of Intellectual Output, Evaluation(s) may be performed on that Intellectual Output or prospective Intellectual Output to further identify and process that information. From the results of that Evaluation(s), Accreditation and/or Discreditation may result in one or various or many classes, sub-classes or categories of Intellectual Output or Input. Cumulative Data may be maintained, tracked, located and/or relocated on one or numerous Evaluation(s) data Accreditation, and/or Discreditation in various or single categories, classes, subclasses or subject areas of Intellectual Output for each Participant.

Accreditation(s) and/or Discreditation(s), as well as Evaluation(s) may be in the form of a single or Compilation(s) and or Computation(s) of Result(s) of Evaluation(s), from one or any number or any combination of classes or categories upon which the Evaluation(s) are based. These Accreditations, Discreditations, or Cumulative Accreditations and/or Discreditations, may be made available to Participants in any Part or procedure of the present disclosure, such as Iteration(s) or Cycle(s) of Performance or demonstration of Intellectual Output, determination of Intellectual Input, Education, etc. by any Participants, or the System itself, as will be described in more detail later below.

Evaluation and Accreditation can be compiled, computed or otherwise processed, based on Data or information, related to the specific history of a Participant, regardless of where it comes from. This is analogous to the way commonly known financial information services, such as Dunn and Bradstreet use methods of data capture, where financial information is gathered or accumulated based on any financial information or transactions related to the subject or participant of those transactions or data, regardless of the source.

### Examples of processes of use of Accreditation, Entities of Value and Intellectual Output

### CYCLES AND ITERATIONS OF PERFORMANCE

Whenever an/any Entity(ies) of Value are presented, communicated, transferred, exchanged, or conveyed from one Participant to another (either of which may be actual or prospective), a manner(s), type(s), and/or method(s) of Performance(s) are involved. Various Iterations or Cycles of Performance which are common and quite useful as non-limiting examples for teaching some of the purposes of the present disclosure are described herein. These manners and methods of Performance can reveal Intellectual Output on the parts of either or both Recipient(s) and Provider(s). For example, if a Recipient demonstrates interest (by selecting web pages, web forums or websites or individual selections therein, or by providing compensation or exchange of other Entities of Value, etc.) in certain classes, sub-classes or categories of Entities of Value (which may contain Intellectual Output or indications thereof of Provider(s)), then the Recipient(s) is indicating Intellectual preference(s) and /or selectivity(ies) for certain classes, categories or sub-classes of Intellectual Output or Capital. This is a form of Intellectual Output of the Recipient. The recipient may also engage in repeated exchanges with Providers in which Intellectual Output may be displayed by both types of parties.

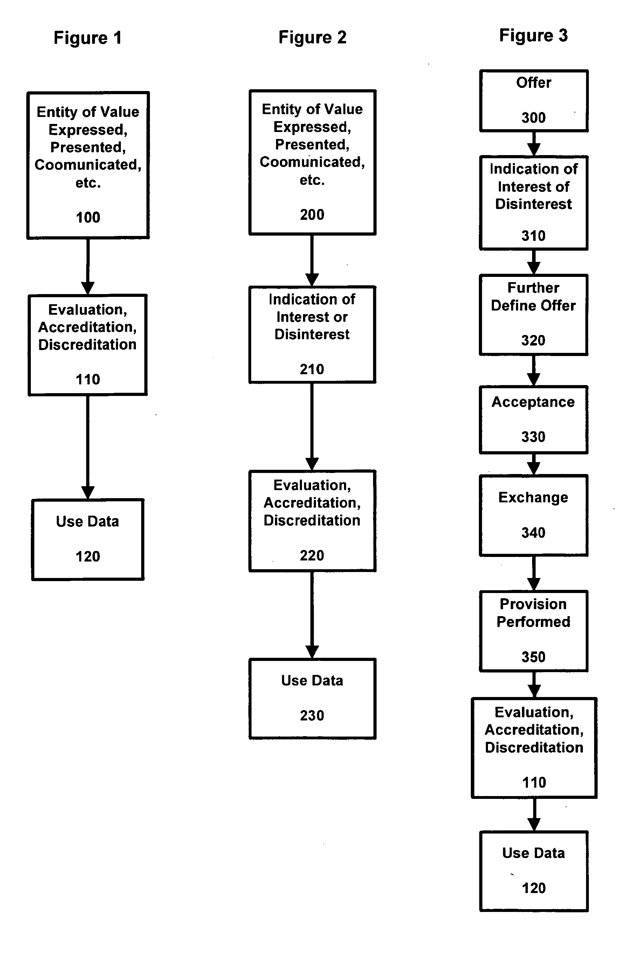

Figures 1-5 illustrate examples of various Cycles or Iterations of Participant Performance(s) or parts thereof that may be performed according to embodiments of the present disclosure. The parts include the presentation, communication, transfer, or exchange, etc. of Information or Data, Intellectual Output, or Entity(ies) of Value (which may contain, convey, carry or be associated with Intellectual Output). Other variations may be created in accordance the present disclosure as will be appreciated by those skilled in the relevant teachings.

These Cycles or Iterations are examples only, of Performance(s) and use of the various benefits and teachings of the present disclosure. These benefits and teachings discussed with regard to these Cycles or Iterations may be used with any type of Performance or Data Captured or processed by other methods pertinent to the present disclosure.

These Cycles or Iterations show how as (discussed elsewhere herein) in any Performance, where there is presentation or exchange by (an) Entity(ies) of any Entity of Value, information or Data may be Captured regarding Intellectual Output, Intellectual Capital or any other aspects of related Entities or Entities of Value. Such Data may of course be used for the purposes and benefits taught herein such as but not limited to Evaluation and Accreditation.

These Cycles or Iterations also show how (as discussed elsewhere herein) with regard or related to or during any Performance, Accreditation may be disseminated or made known or known to exist or available to any Entity(ies) involved or privy to anything related to such Performance. As in or with related to any Performance, such Accreditation may be made known, known to exist or available automatically or manually or elected thru some type of human intervention in any Performance regarding any Entity, including in any examples of Cycles or Iterations.

These Cycles or Iterations also show how (as discussed elsewhere), as in any Performance, Accreditation or any Data Captured regarding any Participant may be used for matching or selecting Recipient(s) for Provider(s) or Provider(s) for Recipient(s) or any type of Cross Linking. Again such matching or selecting may occur automatically or through manual or another type of human intervention for finding or searching and utilizing applicable Accreditation of any party, Entity or Participant, to assist in such matching.

These Cycles or Iterations exemplify ways in which, as in any Performance, involving any type of communication, presentation, expression etc., of any Entity (ies), including but not limited to exchanges or compensations or offers or agreements or other types of expressions or demonstrations of interest, Data may be Captured for use(s) as taught by the present disclosure.

As discussed elsewhere herein, Intellectual Output may be delivered or derived and then Captured from any communication, expression, or presentation, related to or of any Entity or Entity of Value. These Cycles or Iterations give non-limiting examples of various processes in which this may occur.

In many types of communications between Entities involving exchanges or compensation regarding the exchange of Entities of Value for compensation, including but not limited to financial transactions or barter, there is much Intellectual Output from both Recipient(s) or Provider(s) or any other Entity(ies) that may be privy to the transactional communication. In any of these types of Performances as in any Performances taught by the present disclosure, Data may be Captured and Intellectual Output may be found along with information on the Entity(ies) of Value, any of which may provide (an) Evaluation(s) or be Evaluated or further Evaluated, and used for Accreditation. Prior to the present disclosure such Data or information has gone unutilized for the benefits taught herein. The Cycles or Iterations described herein give a few examples of these types of processes.

Accreditation and/or Evaluation (which may include Cumulative of either) Data may be Captured regarding any Participant or Entity from any, all, any combination of, or any number of Performances or Cycles or Iterations of Performance. By using any or any number of Performance(s) as exemplified by the Cycles or Iterations described below or any manner of Performance of Intellectual Output or Input to provide data or information for Data Capture related to an individual Participant, records or discrete methods of access to them, may be created specific to an individual Participant. Evaluation or Cumulative Evaluation Accreditation or Cumulative Accreditation may be derived from this.

As will be clear from the description below and other portions of the present disclosure, different Cycles and Iterations yield different types and varieties of Information and Data of prospective or actual Recipient(s) and/or Provider(s). Such Data and information may be used for purposes taught by the present disclosure, including but not limited to: Evaluation(s) and/or Accreditation(s) of Intellectual Output and/or Performance thereof, Cumulative Accreditation(s), forming, determining or delivering or performing Intellectual Input and Education, and Evaluation(s) and Accreditation(s) (including Cumulative Accreditation(s) which may be combined with Output related Accreditation(s)) thereof.

Part 100 of Fig. 1 may be referred to hereinafter as a Minimum Performance. In Part 100, a single episode or incidence of some or any Entity(ies) of Value is expressed, presented, communicated, communicated about, transferred, demonstrated or otherwise Performed by any Provider Participant(s) (active or passive). This Performance may (or may not be) be unsolicited, gratuitous, unknown, or unacknowledged by any other Participant. Part 100, (and as with any other Performance as taught with regard to the present disclosure) any Step(s), Part(s), or Action(s), episodes or incidences may occur singularly or in indefinite variety or plurality. Part 100 requires only a minimum of one incident or episode of the above described Performance to occur.

As illustrated by Part 105 within the Part 100, any Accreditation(s) and/or Evaluation (s), (which may include any cumulative Accreditation) or Captured Data (prior or current) of or related to the Provider (prior or current actions or Performance(s) thereof) of Part 100 (including any Data Captured of or related to the material or substance or Performance of Part 100), may be made available or known to exist, to any prospective or active Recipient(s) of the material, substance, or Performance of Part 100.

Data Capture may be performed on any or all of the data or information of or related to Part 100, or any action, step, sub-step, part, or sub-part of or related to the present disclosure.

As illustrated by Part 110, of Fig.1, at any time after the Performance or occurrence of Part 100, Evaluation and/or Accreditation (and/or Discreditation) may occur or be Performed regarding or related to the Data Captured (including but not limited to any Intellectual Output corresponding to the Performance of or related to Part 100. This means that any Part(s), Step(s), Sub-Part(s), Sub-Step(s), Action(s), Cycle(s), or Iteration(s), or any amount of time may pass between the occurrence of Part 100 and the Evaluation(s) and/or Accreditation(s) of Part 110 (or between any Intellectual Output, Input, or Education and Evaluation or Accreditation of the present disclosure). This may also involve the Capture of Data related to this Part 110.

Any Data Captured (including any result(s)) from either or both of those parts) may be used for any procedures or benefits of the present disclosure (Part 120). For example, the data or information may be used for forming or compiling further Evaluation(s) and/or Accreditation(s) (including Cumulative Accreditation (s) and/or Credibility Rating(s)). Also, for example, the Data or information Captured may be used for Cross Linking with other Participant(s) (such as but not limited to Provider(s), Recipient(s), Educator(s), etc.) with common or complementary interests. In addition, the Data or information may be used for formulating or otherwise determining Intellectual Input or Education and/or providing or offering the same. Also, for example, the Data or information may be used for or lead into another Part(s), Step(s), Action(s), Cycle(s), or Iteration(s).

Part 200 of Fig. 2, illustrates that any Minimum Performance has occurred in the same manner and with and under the same conditions as described herein for Part 100 (including the availability of Data Capture, Evaluation(s), and/or Accreditation(s) or Cumulative Accreditation(s) to any prospective or actual Recipient(s)), with an exception or additional condition. That additional condition is illustrated by Part, 210. That condition is that prior to, simultaneously with, or following the occurrence of the Minimum Performance (at least) of Part 200, there is a sign, indication or rendering of Interest (or Negative Interest or Disinterest) from any Participant(s). That is, there is some type of response to the material, substance, or Performance (or lack thereof) of Part 200, by any Recipient(s). This sign, indication, or rendering of Interest may be, for example, a gesture (data or information of which is Captured or acquired and/or translated or digitized by or for the System), a keystroke, a donation, a point or accolade, a yes, a no, or another type of answer, a question, interrogatory, or query, a project, a proposal a review, a lashing, an email, visiting a website or web forum or web page or communicating or indicating someway that the recipient(s) has an interest in Part 200 or the Minimum Performance associated therewith. This may or may not include, for example, some type of offering of an exchange or compensation (POINTS, MONEY, GOODS, ETC.) or donation, statement, etc.

Therefore, the iteration of the cycle of Fig. 2 differs from that of Fig. 1, in that not only may Intellectual Output be acquired from the Provider of the material, substance, or Performance of Parts 100 or 200, but Intellectual Output may also be indicated, detected, or acquired from the Recipient of Part 200. This Intellectual Output may be derived from any type of response (Part 210) of the Recipient(s), examples of which are touched upon in the preceding paragraph. Such Intellectual Output provides information or Data on the Recipient(s) such as but not limited to, familiarity or interest in the subject matter or material of Part 200, as well as communication skills or abilities, knowledge or lack of knowledge regarding the material or subject matter of Part 200 or in more general or diverging categories of knowledge or areas of focus.

Part 220 illustrates that at any time after the Performance(s) or occurrence(s) of Part(s) 200 and/or 210, Evaluation and/or Accreditation (or Discreditation) may be performed or occur.

As in Part 120, the Data Captured from any Part(s) of Fig. 2 may be used (Part 230) for any purposes or benefits of the present disclosure for which they might be useful, such as but not limited to those as described above with respect to Part 120.

Fig. 3 illustrates a cycle or iteration of Performance of Intellectual Output(s) or exchange of Entity(ies) of Value which may yield more detailed and/or different types of information on certain types of Intellectual Output than the minimum procedures described above with respect to Figures 1 and 2.

Part 300 of Fig. 3, illustrates that any Entities(y) of Value (which by definition includes anything of any assumed or posed value), may be offered to be Provided in exchange for, in response to, transferred for, for compensation of, etc., anything else such as any other Entity(ies) of Value either of which may include but is not limited to, Intellectual Output itself, Knowledge or information or any type(s) of product(s). Whatever may be offered, received, or provided, from any Participant(s) or the terms thereof regarding this Part, may be undefined or undetermined to some extent.

In Part 300, as well as in any other Part(s) or processes, any Data Capture, Evaluation(s), and/or Accreditation(s) (including cumulative Accreditation(s)) may be made available to any Participant(s), unless restricted for reasons such as but not limited to privacy, confidentiality, restricted use of System, etc.

Part 310 illustrates that there may be an indication or sign, expression of interest or disinterest regarding the Entity of Value from Part 300 from any Participant(s), such as described above with respect ton Part 210. That is, there may be some type of response to the Entity of Value offered in (e.g., material, substance, or Performance, etc.) of Part 300 (or lack thereof), by any recipient(s). This may yield some Intellectual Output from that/those Participant(s) as described above with respect to Part 210 and may be processed in the same manner as described therein.

Part 320 illustrates that the terms of the offer and/or for acceptance made in Part 310, may be further defined or determined, thereby establishing further what or what type Value any Participant(s) may convey for the Entity(ies) of Value. This may indicate or convey Intellectual Output of such as but not limited to, familiarity with certain types of Entity(ies) of Value, judged or expressed importance of them, etc. This Intellectual Output may be processed in the same manner as that described in Part 210 and used for purposes such as determination of Education or Intellectual Input as described above.

Parts 330, 340, and 350, illustrate that Acceptance may be made for any Offer(s), Exchange(s) made, and/or Provision(s) Performed respectively. These Parts may be Performed in any order or any number of times. Data which may be identified as Intellectual Output of any Participant(s), may be Captured from any of these Parts.

Part 360 illustrates that Evaluation(s) and or Accreditation(s) may be performed or expressed for any of the Parts of Fig. 3. Data Captured and/or processed as in Evaluation(s) and Accreditation(s) or any other Parts of Fig. 3, may then be used (Part 370) for or lead to any purposes or procedure(s) of the present disclosure such as described above with respect to Part 120 of Fig. 1.

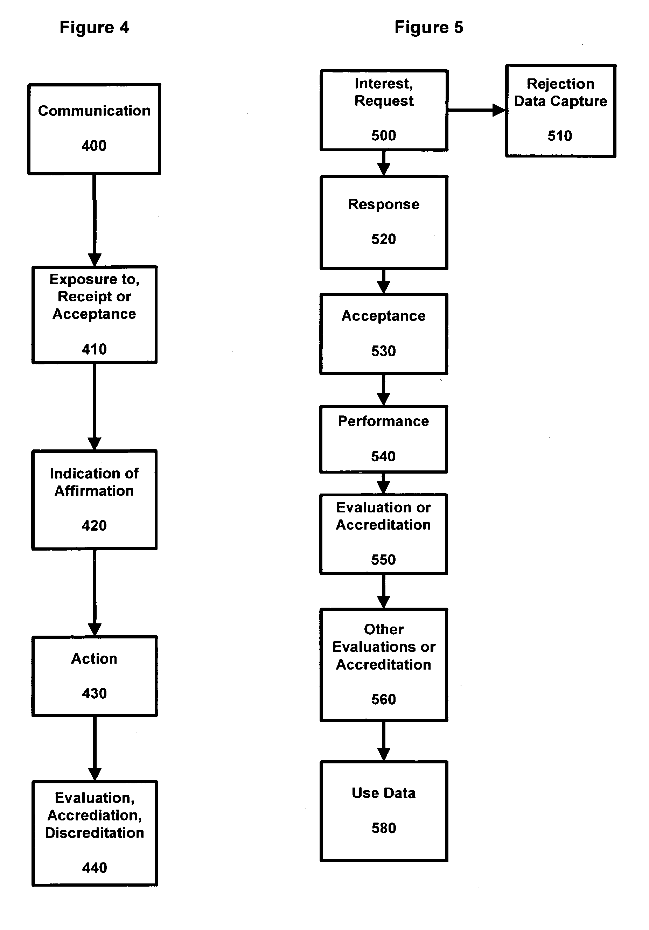

Fig 4 illustrates another type of Cycle or Iteration of Performance of Providing or Exchanging any Entity(ies) of Value. Here again, both or any parties may act as both Recipient(s) and Provider(s) of Entity(ies) of Value and any related Intellectual Output or knowledge or informational Intellectual Output itself.

Part 400 of Fig. 4, illustrates that a communication (which may be, for example, a request, query, inquiry, interrogatory, problem posed, question asked, interest indicated or shown) is made, Provided or Performed regarding any Entity(ies) of Value. For the purpose of this Part, compensation, exchange, payment for, etc. may not necessarily be sought or required. Such types of request(s) or interest(s) expressed are common to Web sites, Web forums, Public forums, etc. Again, prior to or current with data Capture, Evaluation(s) and/or Accreditation(s) of the Provider of the request or material or substance of Part 400, may be made available. In addition, this Provider may set certain parameters or aspect(s) desired of the prior or current Data Captured or Evaluation(s) and/or Accreditation(s) regarding any Responder(s).

Part 410 illustrates that there is some type of response from any Participant(s), to the action(s) of Part 400, indicating either interest or disinterest.

Part 420 illustrates that there may be an indication or affirmation of exposure to, receipt of, or acceptance of the request or Provision of Part 400.

Part 430 illustrates that an action may be Performed or a response Provided by any Participant(s) to the Provision or request of Part 400. Such response may be any Entity(ies) of Value and/or Intellectual Output itself, such as but not limited to, an answer, another question or a more elaborate question or better directed question to a question, a proposal, a project, a video, an audio, a demonstration, a lecture, etc.

In any of these Parts, as in any action(s) or Part(s) of the System, any of the Recipient(s) or Provider(s) prior or current Data Capture, including Evaluation(s) and/or Accreditation(s), may be made available to any other Participant(s).

Parts 410, 420, or 430, may occur in any order or any number of times. Embodiments of the present disclosure can perform data Capture on any form of Intellectual Output, Input and process them for the benefits taught herein.

Part 440, illustrates that Evaluation(s) and Or Accreditation(s) may be performed or expressed for any of the Parts of Fig. 4. Data Captured and/or processed as in Evaluation(s) and Accreditation(s) or any other Parts of Fig. 4, may then be used for or lead to any purposes or procedure(s) of the present disclosure such as described above with respect to Part 120.

Fig. 5 illustrates a Cycle or iteration which may yield an even greater breadth and depth of Intellectual Output of Responders. This may include but is not limited to, Output regarding knowledge base, skill sets and abilities to Perform in any given subject area, as well as value judgments or decisions on different types of Entity(ies) of Value, followed through by Performance(s) in those as well as other areas.

Part 500 illustrates that a Provider of a query, inquiry, request, expression of interest, etc, (may be a Seeker, Buyer, etc.), shows interest in or requests something, (e.g., requests an offer or bid to provide any Entity(ies) of Value) that Entity(ies) of Value may be determined, defined or partially undetermined or undefined. In addition, an offer for compensation or exchange, reward, etc. may be present which may be defined or left open for bids or counter offers, negotiation(s), etc. Again, preferences or settings for Parameter(s) or aspect(s), of any Responder(s) or Provider(s), former or current Data Capture, Evaluation(s) and/or Accreditation(s) may be expressed.

Part 510 illustrates that there may be some Data Capture on Participant(s) rejection(s) of the Offer(s) of 500, which may yield some Intellectual Output.

Part 520 illustrates that some Participant(s) may give a response or make (a) bid(s) and/or offer(s).

Part 530 illustrates that an acceptance may occur which may have conditions such as time limits, price limits, etc.

Part 540 illustrates that work or response(s) may be Performed or Provided.

Part 550 illustrates that as in any Evaluation(s) or Accreditation(s), the Recipient(s) may give such including categorization(s) and/or rating(s).

Part 560 illustrates that Evaluation(s) and Or Accreditation(s) may be performed or expressed for any of the Parts of Fig. 5. Data Captured and/or processed as in Evaluation(s) and Accreditation(s) or any other Parts of Fig. 5 may then be used for or lead to any purposes or procedure(s) of the present disclosure such as described above with respect to Part 120.

### Evaluations

Intellectual Output, Intellectual Input, Intellectual Capital, Education, Entities of Value and Performances may provide (an) Evaluation(s), be Evaluated or further Evaluated, Categorized and added to Accreditation. Furthermore, the ability to assimilate Education or Intellectual Input may be Evaluated. Evaluations may also be subject to Data Capture, or may be generated automatically, manually or otherwise through human intervention (as the term manually, is meant to convey throughout this disclosure), for example, by human beings writing a review for an Entity of Value, for example, a service performed by an entity such as a law firm, physician or hospital, or a species of Education.

It will be appreciated from the present disclosure that an Evaluator may be Accredited or discredited based upon their Evaluation and those Evaluators of the Evaluator may also be Accredited on their evaluation of the Evaluator, and so on and so forth thus providing an endless stream of checks and balances.

Evaluations themselves can be expressed in many different ways. For example, the detailed rating system found on websites such as eBay might be sufficient for simple transactions, but may not be suitable for rating Education or a Performance. Evaluations can use letter grades, words, language, alphabetical ratings, numerical ratings (such as 10 out of 10), stars, marks, strikes, simple thumbs up or thumbs down, or any method devised to evaluate or rate something, someone, a service or the performance of a single task or series of tasks. Factors such as quality, integrity, accuracy, correctness, comprehensiveness, taste, color, shape, sound quality, speed, finesse, efficiency, thoroughness, truthfulness, honesty, timeliness, or any other factor can be a component of an Evaluation or an Evaluation by itself.

An Entity of Value may be a product of the Intellectual Capital of any Provider of it. Therefore an Evaluation of the Entity of Value may contribute to the Intellectual Capital or Output Accreditation of the Provider. A Recipient of course may also engage in Intellectual Output (communication, expressions, etc.) regarding an Entity of Value, and receive Accreditation for it.

For example, the DePalma Tomato can be Evaluated for size, color, shape, taste, lycopene level, potassium level, shelf life, usefulness for tomato sauce, and a myriad of other factors. Similarly, Mr. DePalma can be Evaluated on his books, articles, blog entries, and his Performance, including Mr. DePalma's ability to deliver DePalma Tomatoes in a timely fashion. Evaluations can also concern the quality of a inquiry about the DePalma Tomato, or Mr. DePalma's answer to that inquiry.

Accreditation may be Categorized in any number of ways. For example, Evaluation(s) and/or Accreditation can be Categorized using any type of numerical or alphabetical system, for example, such as but not limited to the Dewey Decimal System, the Patent Manual of Classification, any similar type of system(s) or any other system for classifying subject matter. Accreditation may also be found through computer methods such as but not limited to keyword, word string, or Boolean searches. Further, a single Evaluation may fit in more than one Category or Sub-Category. Using the above example regarding Jonas DePalma, Mr. DePalma's book may cover topics such as organic farming and hydroponic farming. Accordingly, Mr. DePalma's Accreditation may contain Evaluations regarding each of these Sub-Categories under the general Category, Intellectual Output, Sub-Category, Books and Articles, Sub-Sub-Category: Organic Farming, and second Sub-Sub-Category: Hydroponic Farming. Further, each of these Sub-Sub-Categories may include scores or grades for accuracy, efficiency, ease of use, etc.

Referring to the previous example, if Jonas DePalma posts answers to questions about organic farming on www.organicfarmingreview.org (a mythical website were organic farmers exchange information and methods), those answers could be subject to Data Capture and Evaluated for accuracy, efficiency, cost, conformity to USDA Organic regulations, etc. Mr. DePalma's posts would then be Categorized and added to his Accreditation in a number of different ways. For example, Mr. DePalma's posts might be Evaluated, those Evaluations Captured and then Categorized by topic such as pest control, optimum nitrogen levels, or organic tomato incubation techniques and incorporated into Mr. DePalma's Accreditation. Alternatively, Mr. DePalma's posts could each be Evaluated, Categorized and incorporated into Mr. DePalma's Accreditation individually.

As a result, Mr. DePalma's Accreditation may have many different sources and therefore will present a more accurate and fuller picture of his agricultural business, his Education, the depth of his practical knowledge/experience (based on, among other things, the number of Sub-Categories in his Accreditation regarding organic farming and his Evaluations) and his customer approval ratings, which are also a component of his Accreditation. This in-depth and varied portrait of Mr. DePalma set forth in his Accreditation in turn facilitates others to do business with Mr. DePalma by providing a level of trust and confidence among those who have never met one and other and who have never done business with each other.

Negative Evaluations, which may lead to Discreditation, are valuable in their own right as they perform several functions. For example, one or more negative Evaluations may result in a suggested, corrective Education or Intellectual Input to improve the taste, marketing, delivery or nutritional value of one's organic tomatoes, for example. Negative Evaluations may also be valuable simply as feedback concerning any number of issues that permit the person, entity or system to change and adapt to improve in a myriad of ways and better serve a particular customer base, attract new business, or improve one's trustworthiness, reliability, or any type of Evaluation. For example, negative Evaluations may cause a particular entity to improve the reliability of their products (their Entities of Value), their services (their Performance) and the marketing of products and services (another Category of Performance).

### Accreditation

Accreditation is an accumulation, filtering and/or Categorization of Evaluations that may be compiled over the course of days, months or years (which is Cumulative Accreditation), or Accreditation may contain a single Evaluation. Accreditation may summarize and Categorize Evaluations to provide a quick overview, and/or may also provide access to the Evaluations themselves, in the event a reader or system may wish to see the exact content of a particular Evaluation or the contents of a number of Evaluations. Evaluations may also be linked to the Intellectual Output, Entity of Value, Performance or the person, product, service, entity or system being Evaluated to provide the reader with context or additional information about the person, product, service, etc., or to recommendation specific types of Education (or Intellectual Input)

It will be appreciated that Evaluation(s) and/or Accreditation(s) may contain information or Data that has not been categorized or rated. For example, there may be information or Data that a Participant or Entity has visited eBay. Although this Data may be unrated and uncategorized Data, it does to some extent "identify the nature" of that Participant or Entity. This information or Data may be further analyzed at some point to show that the particular section of eBay that the Participant or Entity visited is devoted to a particular subject category of Entities of Value and therefore the Participant or Entity has shown some familiarity with or exposure to that category.

Accreditation may contain in whole or in part common Data or information which may include Categorization(s) and/or rating(s) related to any Entity, from Performance to Performance which may include but is not limited to: to Iteration, to venue, to communication forum, to media or type of media, regarding any type of Entity of Value, or category or type of Intellectual Output, Input, Education or for any other purposes taught by the present disclosure.

Evaluation(s) or Accreditation(s) for any Entity may be obtained from network based Entities whose primary function is to operate over the Internet such as including but not limited to: Amazon.com which may offer literary, music or other types of ratings, Ebay which may offer customer feedback or evaluations, Question and Answer websites which may give ratings. Of course Data may be Captured from any network based source and used for Evaluation according to the teachings of the present disclosure.

Evaluation(s) or Accreditation(s) for any Entity may be obtained from sources outside of the Internet or Worldwide Web or from non-network based Entities. Such non-network or non-web Entities would be any whose primary function is non-network or that could or did exist independently of the Internet such as including but not limited to: traditional institutions of formal Education, Colleges, experts or authorities, various professional oversite or licensing organizations, literary reviews or critics of various types of endeavors, organizations that provide awards such as the Nobel prize or Pulitzer prize, etc. Any of these may offer ratings and/or categorizations of Intellectual Output or Entities of Value. Of course Data may be Captured from any network or non-network based source and used for Evaluation according to the teachings of the present disclosure, whether or not they provide ratings and/or categorizations or are considered authorities or experts.

Accreditation may also be used to match Recipient to Provider or Provider to recipient either through manual or human intervention or automatically. This may be considered a type of Cross Linking, but is a special benefit since Cross Linking allows matching of Provider to Provider and Recipient to Recipient for engaging in same, similar or complementary efforts.

### Education

Evaluations and/or Accreditation can also be used as a feedback mechanism to recommend further Intellectual Input and/or Education to foster improvement in the thing, product, person, Entity, service or system that was Evaluated. Note that Intellectual Input and/or Education can be recommended without negative or neutral Evaluations, to broaden or improve a person, thing, product, service, Entity, activity or system. Based on Evaluations or Accreditation, Intellectual Input or Education may be customized, formulated, designed and selected to improve, expand, or diversify Education and thereby, the Intellectual Capital of any a person, thing, product, service, Entity, activity or system to better serve his/her/their/its own interests or that of others.

Intellectual Input may consist of any type of knowledge or information, no matter how small or trivial. For example, Intellectual Input may be, for example, a single word in response to a query such as how do you say "Good idea" in Japanese. Intellectual Input also includes message board or blog entries, DVDs, articles, books, videos, demonstrations, and/or courses. Education may be in the form (but not limited to) lessons, tutoring, or other types of exercises or programs. Education can be used for corrective purposes or to provide complementary information or skills based on prior Evaluations or Accreditation as a whole. Education may also be used to diversify or teach skills that are different from past Evaluations, and/or Accreditation.

A person, service, Entity or system may be Evaluated after receiving Intellectual Input or Education, based on the person, service, Entity or system's mastery, assimilation, understanding, and proficiency in the Intellectual Input or Education. In addition, the person, Entity, service or system providing the Education can be Evaluated based on the content of the Education and its delivery (i.e., its Performance).

The Intellectual Output from one person or Entity, for example, may provide Intellectual Input or Education to another person or Entity. Moreover, a person or entity may select and provide his or her own Intellectual Input or Education through self-study, which may then be Evaluated (for assimilation and mastery of that material or subject matter). As a result, any person, Entity or system can improve its own Accreditation by self Education.

Although Intellectual Input or Education can be derived from any source, Intellectual Input or Education may be custom-tailored to the needs or benefit of any one holding Accreditation.

For example, if a microbiologist, Dr. DeCampo is working on cultivating a certain strain of bacterium known as Eschericia Coli or E. Coli and is trying to find what culture medium is best to grow E. Coli, a search might reveal several articles on this topic. The microbiologist could then study these articles (Intellectual Input). Later, using the principles taught in the articles, Dr. DeCampo succeeds in growing stains of E.Coli that were very difficult to grow. Later that year, Dr. DeCampo publishes his findings in a scientific journal, to much acclaim. These praises are subject to Data Capture and added to Dr. DeCampo's Accreditation as, among other things, mastery of the above-mentioned scientific articles. Separately, Dr. DeCampo could rate the authors of articles in question for content, clarity, ease of use and accuracy, providing Evaluations to other microbiologists. These evaluations could be Captured and added to the Accreditation of these other microbiologists.

### Formulation, Selection, Design, Choice, and/or otherwise Determination of Intellectual Input or Education and Process of Education

Based upon any Performance(s) or Data Captured by any Part(s), Sub-Part(s), Step(s), Sub-Step(s), Action(s), or Data acquired otherwise by the System, including but not limited to Evaluation(s) and/or Accreditation(s), Intellectual Input used for Education or Instruction (which in an embodiment may include correction), may be formulated, selected, designed, chosen, or otherwise determined, to inform or suggest to any Participant(s), how he/she/they may improve, expand, or diversify skills, expertise, repertoire, knowledge, or available information in any way to better serve his/her/their own interest(s) or that of others in the future.

Education may be any form of any Intellectual Input offered, exposed to, or given to any Participant(s), that may be helpful, and it may be in the form of any Intellectual Output from any other Participant(s). For example, Education may be (but is not limited to) in the form of one or more words or gestures, one or more sentences, visual or other sensory perceptible communication, or an article(s), book(s), video(s), demonstration(s), course(s) or an entire degree program. It may be in the form (but not limited to) lessons, tutoring, or other types of exercises or programs. In some embodiment(s) it may be to correct Participant(s) Output, in another or others, to inform or teach complementary information or skills from that demonstrated and/or Evaluated and/or Accredited in the prior history of any Participant(s). Education may also be used to diversify or teach skills or information that are different from a Participant(s) past history, skill(s), prior Evaluation(s), and/or Accreditation(s) or cumulative Accreditation(s).

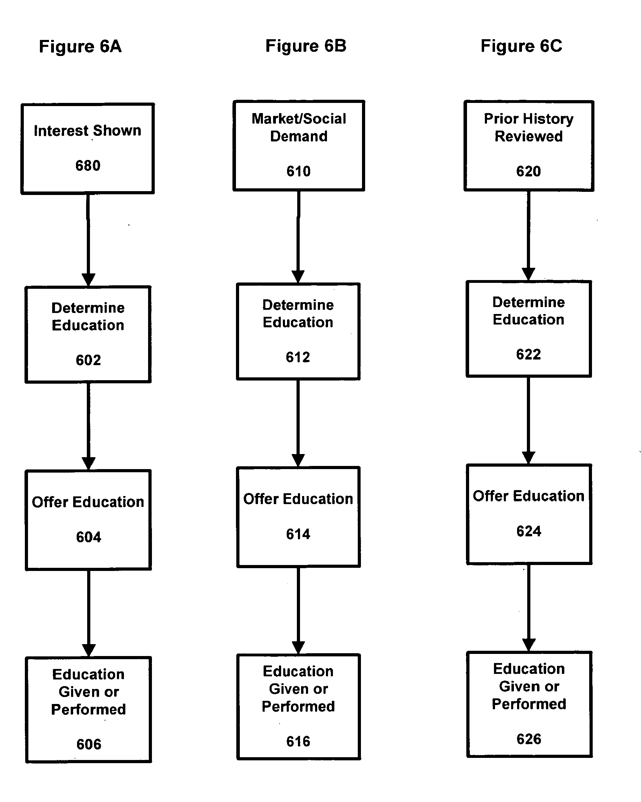

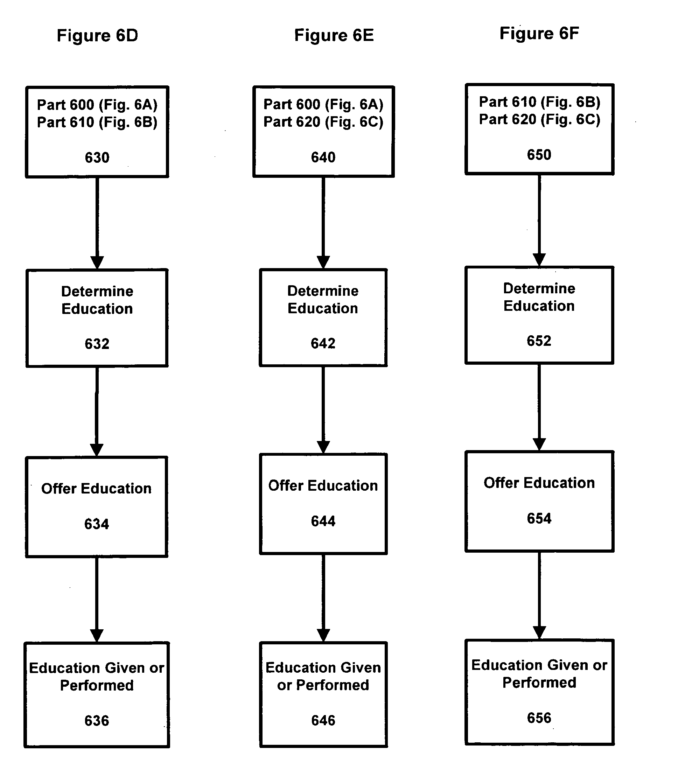

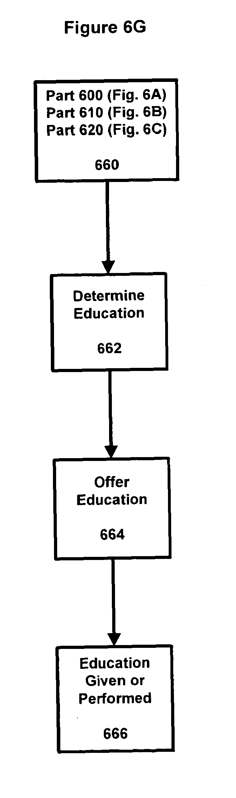

Figure 6 illustrates non-limiting exemplary ways in which Intellectual Input or Education may be formulated, selected, designed, chosen, or otherwise determined for any Participant(s).

For example, as illustrated by Fig. 6A, if there is any type of interest shown (Part 600) (or demonstration or presentation, etc. of any type) by (a) Participant(s) for Intellectual Output, or Entity(ies) of Value (that may convey any type or types of Intellectual Output), this Data may be captured and Education may be determined accordingly (Part 602) and offered to any Entity(ies) (Part 604). The Education may then be provided or offered to (an)other Entities(y) based at least in part on that Data Capture and/or Accreditations of those (that) Participant(s) upon whom the Data is Captured regarding the interest shown. (Part 606). Accordingly, in this embodiment, Education may be formulated based at least in part on Data Capture or information of interest shown of Participant(s) other than the or those to whom the Education is offered.. Such interest may be (but is not limited to) indicated or measured by Questions asked and/or answered on web sites, at web forums, or Output offered unsolicited on web sites or blogs or in news groups, or in any announcements, presentations or communications. Such interest may be based upon or lead to Cross Linking of Participants. This interest may be Captured (and may be Evaluated and/or Accredited), from any Performance, including but not limited to Cycles or Iterations of Performance described in the present disclosure. The interest (which may include a degree or volume of demonstration of interest from Participant(s)) or demonstration in a particular type of Intellectual Output or subject, category, or area of interest may come from Provider(s), Recipient(s), Seeker(s), etc, and Education may be used for any other Participant(s), to improve, expand, inform, or otherwise better, complement, or diversify (which may include diverging from) their knowledge, understanding, or proficiency with regard to that type of Intellectual Output, subject area, etc.

Fig. 6B illustrates that Market or social Demand or need or interest, which may not be measured by the volume or degree of Intellectual Output associated with it (such as in determining interest as in Fig. 6A), but instead is something which is in need or demand or of interest, which people for some reason or another may not be familiar with or be prepared enough or have Intellectual Capital enough to demonstrate Intellectual Output of or not want to, may be used to determine or formulate, etc. Intellectual Input and Education. In this case, when a Market or social Demand is determined and Data Captured (Part 610), appropriate education can be determined (Part 612). The Education can then be offered (Part 614) to the Participant(s) and given or performed (Part 616). For example (but not limited to), there may be a great need for Strontium or a rare earth metal, and although few people may have Intellectual Capital associated with the provision of such an Entity of Value, high compensation (and thus high need or demand) or high value of Exchange (which may be from a single or very few episodes or incidences of Performance, or from information imported or acquired from outside the System) may be detected from Performances such as in the Cycles or Iterations of Performance(s) of Exchange of Entity(ies) of Value and Intellectual Output, described in the present disclosure or from information imported or acquired by the System from outside source(s). Thus a high market or social demand may be used to formulate, determine, select, etc., Intellectual Input or Education offered or given in the prospecting, mining, processing, or acquiring, etc. of Strontium or the rare earth metal. This example differs from that of 6A, in that in this embodiment, the degree of compensation or exchange or type of compensation or exchange or reward, offered, paid, transferred or demonstrated, can be utilized to measure and identify the need for Education rather that the degree or volume of interest shown or demonstrated by Performance or Intellectual Output.

Fig. 6C illustrates that a Participant(s) prior history, Evaluation(s) or Accreditation(s) (which may include Performance in which the Participant is currently engaged), which may include Data or Information Captured, regarding the Participant(s) prior Performance, Intellectual Output, or Education, which may include any familiarity with any Entity(ies) of Value, including Cycle(s) or Iteration(s) of Performance participated in, or Performance related to, may be reviewed (Part 620) and used to select, formulate, determine, etc, Education (Part 622). The Education may then be offered to the Participant(s) (Part 624) and the Education can be given or performed (Part 626).

Figs. 6D thru 6G show that any combination's of the above criteria and data Capture may be used for formulating, selecting, etc. Education. Figs. 6D thru 6G are described in more detail below.

### Process or Performance of Intellectual Input and Education

Unlike Intellectual Output, which generally requires some use of the Participant's own Intellectual Capital to be demonstrated, Intellectual Input may be formulated, selected, etc. and demonstrated by any other Participant (s) (which would be a form of Intellectual Output of those Participant(s)) or (an) auto Participant(s), or performed by the System itself (which may include imported or acquired info, at any stage of processing such as preevaluated or pre-accredited, etc. or services from outside the System). A Participant does have the option of providing his/her/their own Intellectual Input which may lead to self Education.

Intellectual Input may be determined, selected etc. using (but not limited to) any of the above described criteria or others from the universal data base captured by the present System, that is from any or all Data Captured by the System from any or all Participant(s) or activities of those Participant(s) or any other type of data or information.

Another way in which Intellectual Input of the present disclosure differs inherently from Intellectual Output is in how it is Evaluated and/or Accredited or Cumulatively Accredited according to the present disclosure. Any Participant(s), after being exposed to or having received any form or material of Intellectual Input may be Evaluated and/or Accredited (which may be used for Cumulative Accreditation), based upon that/those (if evaluated or accredited as a plurality) Participant's(') mastery, assimilation, or knowledge, understanding of, skill, proficiency, etc., of the Intellectual Input (which may include of the material or substance of the Intellectual Input and Performance in this showing of the Participant(s)). This differs from Evaluation and/or Accreditation or Cumulative Accreditation of Intellectual Output, where the identification, categorization, rating, and/or measuring is done based upon the material, substance, or Performance thereof of what is Provided, presented, communicated, etc. to others, with no need for or without having been exposed to or received the material or related material first.

### Prepared Education

Any Intellectual Output from any Participant or source outside of the System may be used as Intellectual Input or Education. This occurs whenever a Participant engages in the input or assimilation of any such Output. Any Participant may engage in Intellectual Output that may be intended for Intellectual Input of another, but unless the other Participant receives it, it does not educate the other Participant or produce Education for the other Participant. A Participant may engage in his or her own Intellectual Input, which may be recognized by the System as Intellectual Output of the Participant regarding any subject, and then if Evaluated (for assimilation and mastery of that material or subject matter) as integrity of Intellectual Input or Education is, the Participant may be Accredited for that Intellectual Input (or self Education), with any degree of or lack of help from any others.

It is a tremendous advantage of the present disclosure, that although Intellectual Input can be derived from any source of information or data, by using the System of Data Capture (including but not limited to Evaluation(s), Accreditation(s), and interest, exchanges, demand(s) or terms of demand(s) for Entity(ies) of Value such as included but not limited to those means described under Cycles and Iterations of Performance), taught herein, to Capture or acquire discrete data or ways of facilitating access to such data, Intellectual Input or Education may be prepared for Participant(s), using the method(s) touched upon above to tailor Intellectual Input and Education to the needs or benefit of the individual Participants and others, in a way that far exceeds what is known in the background art. Such Education (as described to some extent above), which is prepared utilizing this discrete data (or data of which access is facilitated by the present disclosure) of the present disclosure, is referred to herein as Prepared Education.

Interest may be shown for or demonstration or presentation, etc. of any type of Intellectual Output, or Entity(ies) of Value (that may convey any type or types of Intellectual Output), then Education may be provided or offered to other Participant(s), based at least in part on that Data Capture or information as described above with respect to Fig. 6A. For example, based upon a subject of general interest identified related to an Entity of Value for any and all types of Intellectual Input/Output, Education may be determined. For example, interest in information on an aspect of healthcare and a great volume or great depth of exploration in Intellectual Output found by the System in this subject area or material such as in healthcare or hygiene information, or protecting oneself from environmental hazards such as air or water pollution that everyone is vulnerable to and that anyone can benefit from regardless of their Accreditation or Data Capture personal to them can provide a guide for selecting, formulating or otherwise determining Prepared Education.

Education can be prepared from one or more sources Based upon the unique Accreditation of the receiver of Education. For example, referring again to the tomato Provider example, Education can be Prepared for, selected and formulated for the tomato Provider from 3 sources or one source based upon multiple Accreditation or Evaluation of the tomato provider showing his three separate interests in three separate venues for Potassium level increase, vitamin C level increase and lycopene increase.

As described above with respect to Fig. 6B, market or social demand or need or interest may be based upon a degree of compensation. In addition, compensation or high value of exchange offered for solving a problem for which there is very little Intellectual Output having been demonstrated like when the first offer for inventing a completely body powered vehicle for flying across the English Channel may be utilized by the present disclosure. For example, if someone has information valuable for achieving a particular goal, the Participant may offer it as Prepared Education to any other Participant(s).

As discussed above with respect to Fig. 6C a Participant(s) prior history (which may include Performance in which the Participant is currently engaged), which may include that Participant's Accreditation, Data or Information Captured, regarding the Participant(s) prior Performance, Intellectual Output, or Education, which may include any familiarity with any Entity(ies) of Value, including Cycle(s) or Iteration(s) of Performance participated in, or Performance related to, may be used to select, formulate, determine, etc, Education. If for example, the participant is answering questions relating to a video demonstration on engine auto mechanics, the Participant could be offered courses or other Prepared Education on transmission auto mechanics.

Various combinations of the above are possible. For example, Fig. 6D illustrates a combination of Fig. 6A and Fig. 6B. In this example, in Part 630 there may be great interest shown in information on Energy Conservation in a manner similar to that described above with respect to Part 600 of Fig. 6A. However, utilizing the system of Part 610 of Fig. 6B it may be determined that people are offering far greater compensation paid for information on wind energy than on solar energy related information. Therefore based upon this, Intellectual Input or Prepared Education may be formulated, selected or determined for wind energy selectively over solar energy (Part 632). The Education can then be offered (Part 634) and given or performed (Part 636) as described in the other embodiments above.

Fig.6E combines the concepts described above with respect to Fig. 6A and Fig. 6C. In this case, in Part 640 Accreditation may comprise Data Capture of interest shown (utilizing the methods described above with respect to Part 600 of Figure 6A) or expressed by other Participants or from other sources and a Participants own Accreditation or history (utilizing the methods described above with respect to Part 620 of Figure 6C) which may include Data Capture. Based on this, Education for a Participant may be formulated, selected, determined, etc. (Part 642). The Education can then be offered (Part 644) and given or performed (Part 646) as described in the other embodiments described above.

For example, if a microbiologist is working on cultivating a certain strain of bacterium known as Eschericia Coli or E. Coli and is researching or trying to find what culture medium works best, Data may be Captured and he may be Accredited for work in this area of Intellectual material or subject matter. The System of the present disclosure could locate another microbiologist with the closest matching Accreditation and this microbiologist could provide Intellectual Input for Education of the first microbiologist that may assist him in his efforts in finding the best culture medium.

Another more general example would be where there is a general interest shown by Intellectual Output of Participants and their related Accreditation and Data Capture in for example wind generated Energy. Another Participant, for example, a scientist or engineer with Accreditation in aerodynamics, related to windmills, but possibly lacking Accreditation in electrical generation technology, could have Education determined and offered to him in electrical generation technology.

Fig. 6F combines the concepts of Fig. 6B and Fig. 6C. Education may be Determined (Part 652) based upon the degree or change in the degree of Compensation or value of exchange (rather than as in 6A, nature, degree or amount of Intellectual Output being displayed by Participant(s)) being offered and/or accepted or received for an Entity of Value combined with the Accreditation of a Participant (e.g., a combination of Part 610, Fig. 6B and Part 620, Fig. 6C) in Part 650. The Education may then be offered (Part 654) and given or performed (Part 656).

For example, it may be found through Data Capture of the present disclosure that there has been a great increase in the degree of compensation offered or value of exchange for Strontium and there may also be a decline in that offered for Platinum. Education could then be Determined by the System of the present disclosure to be offered, regarding the purification of Strontium, to a metallurgist or chemist with Accreditation in the purification of Platinum (but lacking some Accreditation regarding the purification of Strontium) or other metal which may utilize the same or overlapping, similar or easily modified or learned skills as in or from the purification of strontium.

Fig. 6G combines the concepts of Fig. 6A, Fig. 6B and Fig. 6C. In Part 660 Intellectual Output or Accreditation (Part 600, Fig. 6A) of Participant(s) combined with nature or degree of compensation or value of exchange being offered and/or accepted for Entities of Value (Part 610, Fig. 6B) combined with Accreditation or prior or current Intellectual Output (Part 620, Fig. 6C) and/or Input of a Participant may be used to Determine or Prepare Education in Part 662. The Education may then be offered (Part 664) and the Education can be given or performed (Part 666).

For example, if it is found (as illustrated by Fig. 6A) that there is Intellectual Output and Accreditation regarding the culturing of both E. Coli and Streptococcus bacteria (which may be from one or more Participants) and it is also found that (as illustrated by Fig. 6B), there is a much higher value of exchange or compensation being paid or offered for (such Entities of Value as) cultured Streptococcus than cultured E. Coli., a microbiologist (or Participant) with not quite up to date Accreditation in the culturing of both E. Coli and Streptococcus may be found from the database(s) of the present disclosure or from a discrete system of facilitating access to the discrete data of the present disclosure (such as data on Accreditation of Participants). Education may then be Determined, Prepared, and offered to this Participant regarding more up to date information or teaching of the culturing of Streptococcus (or relative advantages of as found by the System of Accreditation and Data Capture of the present disclosure), selectively for higher compensation, rather than E. Coli.

In another example, it is found (as illustrated by Fig. 6A) that there is Accreditation among Participants from Intellectual Output (demonstrating interest in) transduction of both solar and wind energy into electrical energy. It is also found (as illustrated by Fig. 6B) that there is a much higher value of exchange or compensation being paid or offered for (such Entities of Value as) solar rather than wind supplied electrical energy. An Engineer (or a Participant) with not quite up to date Accreditation in Intellectual Output regarding transduction of Solar Energy into electrical energy and wind Energy into electrical energy, may have Education Determined, Prepared, and offered to him in more up to date information or teaching regarding the transduction of (or relative advantages of as found by the System of Accreditation and Data Capture of the present disclosure) Solar, selectively for higher compensation, rather than wind energy into electrical energy.

### Networking and Data Capture

Given its record keeping and data processing function, Accreditation should preferably be accessible, portable and follow the person, entity, service or system being Accredited, much like a financial or credit rating of a particular person or business.

Accreditation may be stored in a database, link, cookie, file structure, pointer (to a database, website or storage device), or any other hardware or software that can store data representing the Accreditation or a particular person, Entity, institution or system, or associated with a particular Entity of Value, quickly and efficiently, similar to how financial records are checked before a person opens a store credit card on the spot, or how a person's credit limit associated with a particular credit card is located and provided quickly to a merchant before the merchant decides to accept the credit card.

A variety of systems and methods to store and retrieve data representing Evaluations or Accreditation are well known in the art. For example, data representing Accreditation may be stored in many forms such as (including but not limited to) magnetic media such as magnetic tape or disks, optical media such as disks or CDs, electronic devices such as RAM or ROM, etc.

In this regard, aspects of the present disclosure may comprises a discrete database or databases and/or facilitated ways of access to discrete Data (such as storing of locations or information on how to access Data) on any information relevant to Data Capture or Evaluation and Accreditation as well as other processes of the present disclosure such as, for example, Education for any Participant or Entity, etc.

On a wide area network or the Internet, a cookie, identifier or similar mechanism may facilitate the Capturing of Data (e.g., Intellectual Output, Performances, Entities of Value) associated or created by a person, service, entity or system being Evaluated or Accredited. In this way, the activities, blog entries, books, articles and/or advice of that person or entity, and Evaluations of a person or entities' activities, blog entries, books, articles and/or advice for example, can be Captured, filtered, Categorized and stored for integration with that person's Accreditation autonomously. The Accreditation Data can be stored on a centralized website backed by a server farm, or any similar storage facility known in the art. For privacy concerns associated with individuals, for example, a consent or subscription agreement may be provided so that the person or entity in question understands that his activities on the Internet will be monitored and Evaluations added to his or her Accreditation.

Furthermore, individuals, entities or systems, for example, may want to have Evaluations of their Intellectual Output, Performances or Entities of Value added to their Accreditation. This can be accomplished by manually adding information, such as a link for example, that points to these Evaluations, or some other mechanism of manually providing Evaluations to be incorporated into an Accreditation can be provided. Further, a webcrawler or software application can be employed to automatically locate the activities of an Entity, such as books, articles, blog entries written by the entity, Entities of Value created, grown or manufactured by the entity, or Performances by the entity, so that these items can be subject to Data Capture and added to an entities' Accreditation.

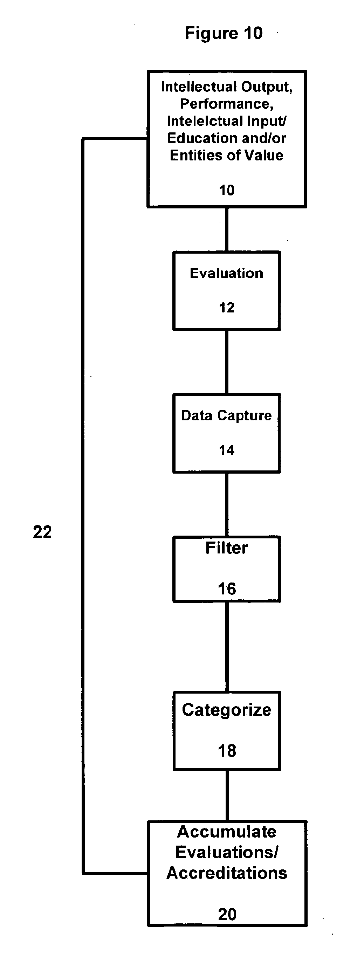

Referring to Fig. 10, Step 10 lists examples of the different modalities or things that can be subject to an Evaluation (Intellectual Output, Performance, Intellectual Input, Education, and/or Entities of Value) or in and of themselves may constitute and Evaluation. For example, the content of a book (Intellectual Output), the quality of a lecture (Performance), the content of an informative blog entry (Intellectual Input), the content of a software program that teaches Japanese to English speakers (Education) or a new strain of rice (an Entity of Value) may be Evaluated as in Step 12, or constitute an Evaluation. Each of these things or actions are subject to an Evaluation or further Evaluation, which may be Captured by the system (note Data Capture can occur at any point in this flow diagram) in Step 14. The system may then filter the results of the Data Capture for relevance, recentness, or the Accreditation of the Evaluator, for example, as shown in Step 16. The Evaluation is then Categorized in Step 18 according to what has been Evaluated (e.g., Intellectual Output, Performance, Intellectual Input, Education, and/or Entities of Value), and then incorporated into Accreditation in Step 20. As shown in Step 22, the entire process can be and often is repeated as a series of cycles, leading to an Accumulation of Evaulations.

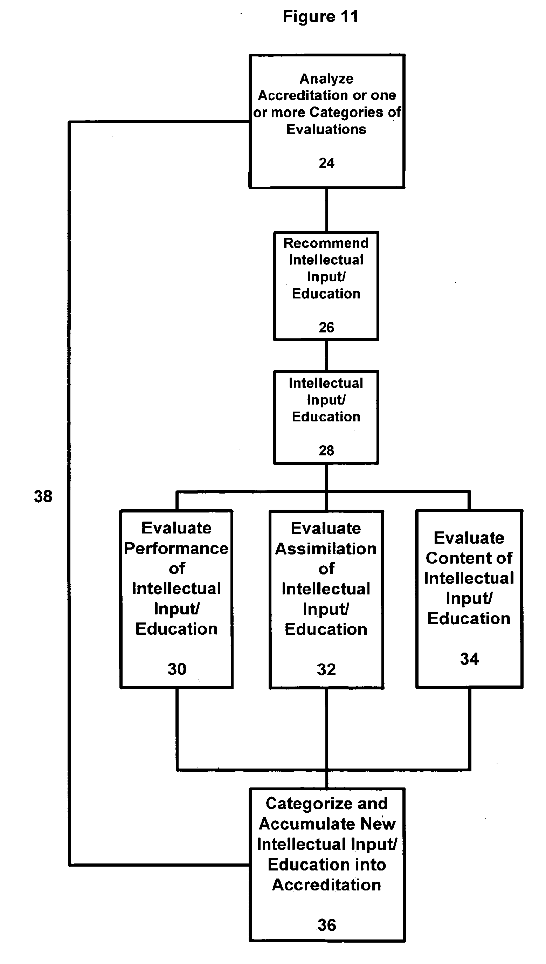

Referring to Fig. 11, Accreditation or one or more categories of Evaluations are analyzed in Step 24. Evaluations and/or Categories of Evaluations, as well as Education are noted, analyzed and compared to other persons, entities or systems with similar Evaluations, for example. Education or Intellectual Input is then recommended in Step 26. The Education or Intellectual Input recommendation is pursued in Step 28. The person, entity, institution or system may then Evaluate the Performance of the Education/Intellectual Input in Step 30 and/or may Evaluate the content of the Education/Intellectual Input in Step 34, for example. Separately for example, other persons, entities, institutions or systems, may Evaluate the assimilation or mastery of the Education/Intellectual Input (Step 28) in Step 32. One or more of the Evaluations of Steps 30, 32 and/or 34 are then Categorized and incorporated into Accreditation in Step 36. Step 38 indicates that this process may be repeated indefinitely.

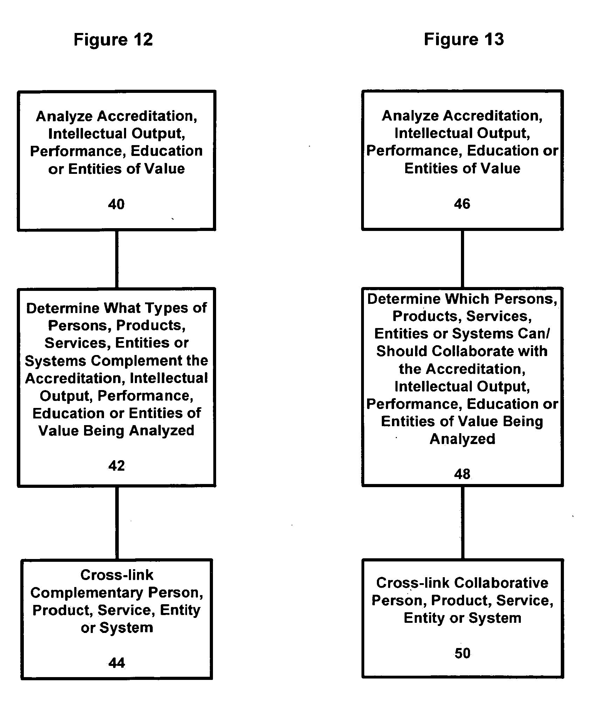

Referring to Fig. 12, Accreditation, Intellectual Output, Performance, Education/Intellectual Input or Entities of Value are analyzed in Step 40. A determination is then made concerning what may complement or be of interest to the person, entity, institution or system being analyzed in Step 42. Finally, a complementary person, product, service or entity, or system, for example, is presented by way of a link, banner ad, email, postal mailing or any form of communication, in Step 44. "Complementary" is used in this paragraph to mean that a person, product, service, entity or system is recommended as something that will compliment the Education, Evaluations and/or Accreditation of the person or thing being analyzed.

Referring to Fig. 13, Accreditation, Intellectual Output, Performance, Education/Intellectual Input or Entities of Value are analyzed in Step 46. A determination is then made concerning what person, product, entity, institution or system might best collaborate with the person or thing being analyzed in Step 48. Finally, in Step 50, a person, product, entity, institution or system that might best collaborate with the person or thing being analyzed is recommended in Step 50. The recommendation referenced in Step 50 may be accomplished using any form of communication, including but not limited to a link, a banner ad, an email message, a text message, a phone call or a mailing.

An identifier specific to each prospective or actual Participant or Entity can be like a social security number (or fingerprint identification) to prevent people from using false identities, as well as for tracking data of the Entity's or Participant's with accurate identification of the source.

### EXAMPLES OF APPLICATIONS

The discussion of Warranties, as legal informational Entities of Value, given in the herein, provides an excellent example of how useful, Intellectual Output Captured (and processed as taught by the present disclosure) as related to, associated with or derived from Entities of Value may be. For example, it has been well studied and reported, that the Tandy Radio Shack business gained a decisive advantage, leading to its success over competitors, due to it's and it's founder Mr. Tandy's Intellectual Capital regarding the use of Warranties.

Mr. Tandy was attempting to sell or otherwise Provide Entities of Value known as electronic vacuum tubes. It is reported that through careful study of the reliability and durability of various vacuum tubes, he was able to offer Warranties with such Entities of Value far more desirable to consumers than the same, similar or comparable Entities of Value (vacuum tubes), without such Warranties. Thus, Mr. Tandy exhibited Intellectual Output associated with Entities of Value.

Embodiments of the present disclosure can benefit a Provider in a position similar to the one that, Mr. Tandy was in. For example, if a Provider1 engaged in exchange, presentation, transfer, etc. of an Entity of Value, such as an electronic component, Data Capture according to the present disclosure could identify such Provider's familiarity with and interest in the provision of such an electronic component. Familiarity and degree and/or nature of interest (which could further be processed through Evaluation and/or Accreditation) that such Provider1 may have displayed regarding such Entity of Value (the electronic component), may be identified and or Evaluated or Accredited to him based upon not only provision of the Entity of Value but, according to the salient features of the present disclosure, from any other Intellectual Output that Provider1 engages in related to that Entity of Value. For example, Provider1 may ask questions or answer questions, write an article, give a lecture, offer advice, Provide informational material with or without the product, etc. regarding that Entity of Value (electronic component). It is a greatly beneficial feature of the present disclosure, that Intellectual Output specific to the Provider, may be Data Captured from any or all of these types of Output or through any further types of Providing (presentation, exchanges, communication about, etc.) that this Provider may engage in, which for the purposes of this example could be regarding the Entity of Value (electronic component).

Another Participant whom we may call Provider 2 (although data, including Intellectual Output may have been Captured on him when acting as a Recipient as well as a Provider, which may be true for any Participant), may be found and identified through the System (such finding may be from Data Capture or from results of any Evaluation(s) or Accreditation(s)), as having displayed Intellectual Output (which again according to the System of the present disclosure may be from any form of Intellectual Output , including but not limited to statement(s), writing, video, question(s), etc.) and/or received Intellectual Input (Education), regarding expertise, the study or knowledge or information, on the durability and reliability of the electrical component or such types of components (Entity(ies) of Value) that Provider1 as said above is engaged in(engaged in Providing such Entity of Value and any related Intellectual Output or Performance(s)). Such finding of Intellectual Output regarding Provider2 may be Captured from any method or manner of Performance, including but not limited to engaging in any cycle(s) or Iteration(s) of Performance as described herein.

Another Participant, whom we may call Provider3, may be found and identified for example as having displayed Intellectual Output and/or received Intellectual Input (for which Evaluation(s) and Accreditation(s) may have been performed regarding the Data Captured on this Provider 3), regarding the authoring and/or use of Warranties for various legal jurisdictions, which may have been related to use or any manner of, Providing (which may include any type of presentation, transfer or exchange) of Warranties as (an) Entity(ies) of Value (from which Data may have been Captured from or related to any Performance(s) of Participant 3 such as in including but not limited to from Cycles or Iterations of the present disclosure). Again Intellectual Output of Provider3 may be from any form of Intellectual Output or type of Performance (which is true of Intellectual Output found specific to any Participant of the present disclosure, unless stated otherwise).

The system of the present disclosure can then use Data Capture (which may include Evaluation(s) and/or Accreditation(s)) specific to Participant 2 and/or Participant 3 and Participant 1 to Formulate, Select, etc. or otherwise determine Education for Provider1. For the purposes of this example, utilizing the Intellectual Capital of Provider 2 on the reliability and durability of the electronic component and the Intellectual Capital of Provider 3 on Warranties, Intellectual Output from both of these Providers may be used to formulate, select or otherwise determine Intellectual Input or Education for Provider 1. This Education may be used to add value to the electronic component or Provider 1's use of such electronic component (Entity of Value) in the same manner that Tandy used reliability and durability Intellectual Output combined with the use of Warranties, and any Intellectual Output that may have been required for that, to add value to his vacuum tubes.

The present disclosure may be used to add value to Provider 1's product or his Intellectual Capital or Output related to the product in other ways such as including but not limited to distribution Intellectual Capital or know how, advertising know how etc. diversification of product line, etc. Alternatively or in addition, Data Capture specific to the Providers discussed in this example, may be used to Cross Link them for engaging in collaboration of, or Providing complementary Intellectual Output.

Another example of how the System of the present disclosure may be used to provide novel benefits to Participants and society follows. An organic lettuce farmer or someone interested in organic lettuce farming (which may be on a beginners level, or as an Apprenticeship, or an expert level) Participant A, engages in Providing some Intellectual Output related to that subject. He engages in giving (Providing) some expression(s) related to that subject in the form of (a) statement(s), an article, advice, a practical demonstration through video or audio or both. He may engage in asking (a) question(s) or giving (an) answer(s) or giving a lecture. These expressions may be over the Internet or World Wide Web or through any other media. For the purposes of the present disclosure, Data may be Captured on these expressions by the present disclosure. These expressions or any of them may be used as or related to (an) Entity(ies) of Value presented, transferred, or exchanged through any manner of Performance, which may include but is not limited to the examples of Cycles and Iterations described herein above. Any of these expressions may be in the form of direct Intellectual Output such as in the form of direct expressions of information or knowledge. In addition or alternatively, Data may have been or will be Captured specific to this Participant on Intellectual Input or Education regarding this subject of organic lettuce farming or related subject matter. Data captured on this Participant for the purposes of this example may be from any locations, from outside of the Internet or on the Internet from various websites, web forums, web blogs, web pages, web groups, etc.

Based upon this Data Capture or any or all of it, he may be Evaluated and/or Accredited, which may be available, according to the present disclosure to other Participants, users or viewers, and may raise their confidence in receiving information or Entities of Value from him and may also lead to or raise compensation or the level of compensation that he may receive.

From Data Capture related to other Participants, it may be found that there is a high incidence of episodes of Intellectual Output regarding organic tomato farming or else a high compensation or highly valued exchange being offered for information or Entities of Value related to organic tomato farming. Thru cross Linking of experts or any other Participants or formulation, selection and determination of Education (which may be performed by any Participant for others or themselves with access to data or the database of Data Capture and/or thru further communication or interaction with other Participants) it may be determined that organic tomato farming may have an overlap or use some or many of the same skills as organic lettuce farming. Thus Education regarding organic tomato farming may be offered to the Participant A, or he may be Cross Linked with those with Evaluation and/or Accreditation or Data Capture related to organic tomato farming.

These are just a few examples of applications of embodiments of the present disclosure. Of course, it will be appreciated that applications for the present disclosure are limited only by the imagination of the user.

It will be appreciated that any type of the communication(s), Data, information, or indications of the present disclosure may be in natural language or made by indications on a display, or by machine, apparatus, device, or any language thereof such as including but not limited to software, digital, etc.

## Claims

1. A computer implemented method of: capturing network based data input to and output by entities over a one or more wide area data network(s) from location to location;
wherein such data is accumulated to form accreditation which is accessed and categorized through a centralized system over a network for a plurality of entities;
wherein the data specific to the entities comprises data identified as input to and output by a particular entity for a plurality of categories per entity for a plurality of particular entities and the identified data is from a plurality of sites over a wide area network;
wherein the data is identified with a centralized system for a plurality of entities which is present at least in part at the location of where data is output by or input to the entities over a wide area network from site to site and location to location;
wherein the accreditation is categorized and accumulated in particular categories for particular entities by repeating the process above a plurality of times; wherein at least one of accreditation and lack of accreditation acquired thus across a network for entities is used to match entities.

2. A method as claimed in claim 1, wherein data specific to the particular entities includes data jointly identified as input to or output from at least one other entity and input to or output from the particular entity for a plurality of particular entities.

3. A method as claimed in claim 1 or claim 2, wherein the identification system comprises at least one identifier mechanism that accompanies data output by and input to an entity.

4. A method as claimed in any one of claims 1 to 3, wherein the identification system identifies data specific to entities autonomously for a plurality of data sets.

5. A method as claimed in any one of the preceding claims, wherein the identification system comprises an identifier specific to an entity for a plurality of entities.

6. A method as claimed in any one of the preceding claims, wherein at least part of the centralized identification system is located on the entity's computer for a plurality of entities.

7. A method as claimed in any one of the preceding claims, wherein at least part of the centralized identification system is located at the site where data is input to or output by an entity for a plurality of entities.

8. A method as claimed in any one of the preceding claims, wherein the identification system is present at the time and at the location where the data is input to or output by entities.

9. A method as claimed in any one of the preceding claims, wherein the identification system is present before and at the location where data is input to or output by entities.

10. A method as claimed in any one of the preceding claims, wherein the identification system comprises at least one of a cookie, a mechanism which sends data for capture smart software, an applet and software that tracks an entity.

11. A method as claimed in any one of the preceding claims, wherein data is captured from one or more emails output from or input to each entity and optionally wherein at least one wide area network is a telephone, audio or video network.

12. A method as claimed in any one of the preceding claims, wherein accreditation specific to each entity also comprises output from a plurality of entities on a plurality of websites associated by one or more names utilized by the entity on various websites .

13. A method as claimed in any one of the preceding claims, further comprising a webcrawler or a software application that locates and/or identifies evaluations wherein at least one wide area network is the Internet and wherein sites and locations include from website to website.

14. A method as claimed in any one of the preceding claims, wherein captured data is output by a plurality of particular entities on each website and is identified as input to each entity and identified for accreditation to all of these entities.

15. A method as claimed in any one of the preceding claims, wherein the type of categorization is keyword.
